# EUROPÄISCHE PATENTANMELDUNG

(11) **EP 4 799 940 A1**
(43) Veröffentlichungstag der Anmeldung: **02.09.2026**
(21) Anmeldenummer: 25160381.7
(22) Anmeldetag: 26.02.2025
(51) Int. Cl.: B64F 1/305, G01S 7/48, G01S 17/86, G01S 17/88

(54) **COMPUTER-IMPLEMENTIERTES VERFAHREN ZUM ERZEUGEN VON STEUERSIGNALEN FÜR EINE SELBSTFAHRENDE FLUGZEUGBRÜCKE**

(71) Anmelder: PSIORI GMBH, 79100 Freiburg (DE)
(72) Erfinder: Voss, Volker, 65399 Kiedrich (DE); Diederichsen, Jan Rasmus, 20097 Hamburg (DE); Lange, Sascha, 79194 Gundelfingen (DE); Busemann, Bolko, 26382 Wilhelmshaven (DE); Perschmann, Axel, 79249 Merzhausen (DE); God, Lukas, 79102 Freiburg im Breisgau (DE); Hammami, Mohamed, 22305 Hamburg (DE); Höreth, Alexander, 10497 Berlin (DE); Hofmeier, Peter, 79112 Freiburg im Breisgau (DE)
(74) Vertreter: Mertzlufft-Paufler, Cornelius

(57) **Zusammenfassung**

Es wird eine autonom fahrende Flugzeugbrücke (4) vorgeschlagen, die in der Lage ist, auf Basis einer komplexen Sensorik (9, 11) eine Flugzeugtür (2) eines in einer Parkposition (16) abgestellten Flugzeugs (1) selbsttätig anzufahren und dabei die Umgebung mittels eines LIDAR-Sensorsystems (9) und mit Hilfe eines Kamerasystems (11) wahrzunehmen .

## Beschreibung

Die Erfindung betrifft ein Computer-implementiertes Verfahren zum Erzeugen von Steuersignalen, die dazu dienen, eine selbstfahrende Flugzeugbrücke autonom zu steuern. Die autonome Steuerung erfolgt dabei während die Flugzeugbrücke eine Flugzeugtür eines in einer Parkposition abgestellten Flugzeugs anfährt oder während die Flugzeugbrücke gerade von dem Flugzeug wegfährt, insbesondere um von der Flugzeugtür abzudocken.

Die Erfindung betrifft weiter eine neuartige intelligente, autonome und selbstfahrende Flugzeugbrücke, die eine Aktorik umfasst, mit der die Flugzeugbrücke bewegt werden kann. Diese Aktorik kann beispielsweise in an sich bekannter Form eines Fahrwerks mit eigenem Fahrantrieb ausgestaltet sein und/oder in Form wenigstens eines Aktuators. Beispielsweise kann ein solcher Aktuator eine Schwenk- oder Hubbewegung der Flugzeugbrücke ermöglichen. Schließlich betrifft die Erfindung auch ein Nachrüst-Set, welches dazu vorgesehen und eingerichtet ist, in eine bestehende (unintelligente) selbstfahrende Flugzeugbrücke nachträglich nachgerüstet zu werden, um auf diese Weise eine erfindungsgemäße intelligente Flugzeugbrücke zu erhalten.

Um Passagieren von Linienflugzeugen ein möglichst einfaches und effizientes Ein- und Aussteigen zu ermöglichen, werden heute auf internationalen Flughäfen selbstfahrende Flugzeugbrücken eingesetzt, die von geschultem Boden-Personal über manuelle Bedienelemente wie Joysticks gesteuert und so bis auf wenige Zentimeter bis an eine Flugzeugtür des in einer genau definierten Parkposition abgestellten Flugzeugs herangefahren werden können. Dabei kommt es aber immer wieder zu sehr kostspieligen Verzögerungen, weil oftmals das für das Verfahren der eingesetzten Flugzeugbrücke erforderliche und hierfür speziell geschulte Personal aufgrund der langen Laufwege auf dem Flughafen erst mit einer Verspätung beim bereits wartenden Flugzeug eintrifft.

Von diesem technischen Hintergrund ausgehend liegt der Erfindung die Aufgabe zugrunde, einen möglichst reibungslosen Ablauf beim Einsatz von selbstfahrenden Flugzeugbrücken zu ermöglichen, sodass insbesondere längere Wartezeiten vermieden werden können.

Zur Lösung dieser Aufgabe wird das Verfahren gemäß Anspruch 1 vorgeschlagen. Insbesondere wird somit zur Lösung der Aufgabe bei einem wie eingangs erläuterten Verfahren vorgeschlagen, dass die Flugzeugbrücke mit einem intelligenten Steuerungssystem ausgestattet wird/ist und dass von diesem Steuerungssystem fortlaufend in einer ersten Datenleitung Live-3D-LIDAR-Messdaten eines LIDAR-Sensorsystems (dieses kann bevorzugt wenigstens einen 3D-LIDAR-Scanner umfassen) und in einer von der ersten Datenleitung unabhängigen zweiten Datenleitung Live-2D-Bilddaten eines Kamerasystems zu jeweiligen unabhängigen Kontrollsignalen verarbeitet werden. Aus den beiden unabhängigen Kontrollsignalen werden dann vom Steuerungssystem in Echtzeit Steuersignale erzeugt, die die Flugzeugbrücke beim Verfahren entlang eines Anfahrtswegs hin zur Flugzeugtür oder aber entlang eines Abfahrtswegs weg von der Flugzeugtür autonom ohne menschliches Eingreifen steuern. Hierbei können die Steuersignale beispielsweise in beiden Datenleitungen jeweils erzeugt werden, oder in nur einer der beiden Datenleitungen oder zeitlich abwechselnd mal in der einen und mal in der anderen Datenleitung. In allen diesen Fällen kann das Steuerungssystem jedoch in intelligenter Weise Daten aus beiden Datenleitungen fortlaufend und in Echtzeit verarbeiten, um die jeweiligen Steuersignale zu überprüfen und im Rahmen eines Sicherheitskonzept autonom an die Flugzeugbrücke zu übergeben.

Es sei bereits an dieser Stelle erwähnt, dass die hier beschriebene Flugzeugbrücke gemäß einem der auf eine Flugzeugbrücke gerichteten Ansprüche und wie im Folgenden beschrieben ausgestaltet sein kann. D.h. insbesondere ist es vorteilhaft, wenn sowohl das LIDAR-Sensorsystem als auch das Kamerasystem an der Flugzeugbrücke montiert werden, sodass sich beide Systeme beim Verfahren der Flugzeugbrücke mit dieser mitbewegen. Beide Sensorsysteme zeichnen dabei fortlaufend während des Verfahrens der Flugzeugbrücke Live-Messdaten auf und diese werden in Echtzeit vom Steuerungssystem verarbeitet, um hieraus die Steuersignale zu erzeugen.

Das intelligente Steuerungssystem basiert bevorzugt auf einer künstlichen Intelligenz (KI), welche die Kontrollsignale / die Steuersignale erzeugt.

Auf Basis der beiden unabhängigen Messdaten (3D-LIDAR-Messdaten und 2D-Bilddaten), die auf unterschiedlichen Messverfahren beruhen (LIDAR vs. bildbasierte räumliche Bestimmung) und von einer künstlichen Intelligenz in den jeweiligen Datenleitungen ausgewertet werden können, wird das Steuerungssystem in die Lage versetzt, autonom, ohne menschliches Eingreifen, die Aktorik der selbstfahrenden Flugzeugbrücke so mittels der Steuersignale anzusteuern, dass diese zentimetergenau die Flugzeugtür des Flugzeugs anfahren kann.

Dieses Anfahren (aber auch das Abfahren) kann bevorzugt in einzelne Phasen von unterschiedlicher Verfahrgeschwindigkeit aufgeteilt sein, wobei das Steuerungssystem auch die Art und Weise verändern kann, wie die Steuersignale in jeder Phase erzeugt werden. So kann beispielsweise vorgesehen sein, dass in einer ersten Phase I eine Grobfahrt ("zügiges, grobes Anfahren des Flugzeugs") erfolgt, bei der die Steuersignale direkt auf Basis der Live-3D-LIDAR-Messdaten erzeugt werden (während die Bilddaten des Kamerasystems beispielsweise lediglich für eine Kontrollfunktion ausgewertet werden können).

Anschließend kann eine Feinfahrt bei reduzierter Verfahrgeschwindigkeit ("Kriechfahrt") während einer Phase II erfolgen, bei der die Steuersignale direkt auf Basis der Live-2D-Bilddaten vom Steuerungssystem erzeugt werden. In dieser zweiten Phase II kann das Steuerungssystem insbesondere einen "visual servoing"-Ansatz implementieren, bei dem eine relative Steuerung anhand von Relativbewegungen zwischen Flugzeugbrücke und Flugzeug im Bildraum des Kamerasystems erfolgt. Zudem kann während der ersten und/oder der zweiten Phase vom Steuerungssystem eine intelligente Kollisionserkennung auf Basis der LIDAR-Messdaten implementiert werden/sein. Eine solche Kollisionserkennung kann insbesondere eine Abschätzung eines momentanen Bremswegs der Flugzeugbrücke auf Basis der LIDAR-Messdaten und weiterer interner Messgrößen umfassen. Auf diese Weise kann das Steuerungssystem rechtzeitig eingreifen, wenn eine Kollision mit dem Flugzeug droht.

Das vorgeschlagene intelligente Sensorsystem kann somit den Körper des Flugzeugs erkennen und insbesondere die Position und räumliche Orientierung der Flugzeugtür live ermitteln, also in 3D im Raum verorten und verfolgen ("tracking"), und zwar fortlaufend, während die Flugzeugbrücke relativ zum Flugzeug vom Steuerungssystem verfahren wird. Diese räumliche Ermittlung und Verfolgung der Flugzeugtür kann dabei (zumindest zeitweise) anhand der Live-2D-Bilddaten und - unabhängig hiervon - auch anhand der Live-3D-LIDAR-Messdaten erfolgen, je nach Ausgestaltung oder je nach Anfahrtsphase, in welcher sich das System gerade befindet. Dadurch kann das Steuerungssystem den Anfahrts- oder Abfahrtsweg auf Basis von Daten der beiden unabhängigen Datenleitungen redundant überwachen.

Die visuelle Wahrnehmung kann bei diesem Ansatz auf einer Objekterkennung und vollen 6D-Lokalisierung der vom jeweiligen Sensorsystem erkannten Objekte ("pose estimation") beruhen. Unter "pose" wird hier die Position und Orientierung in Bezug auf jeweils drei unterschiedliche Raumachsen, insbesondere drei kartesische Achsen x,y,z, verstanden; eine "pose" beschreibt somit sechs Dimensionen, beispielsweis x/y/z-Position plus jeweilige Rotation um die jeweilige Achse. Hierzu werden im Steuerungssystem wie zuvor erläutert zwei separate und unabhängige Sensorsysteme und zugehörige Datenleitungen ("data pipelines") eingesetzt.

Eine solche 6D-pose-estimation bietet sich insbesondere an, wenn die exakten Maße der optisch verfolgten Objekte **(z.B.** Flugzeugtür, -fenster sowie ggf. auch Abstände und Anordnung solcher Objekte) bekannt sind, etwa aus einem 3D-Modell des anzufahrenden Flugzeug-Typs. Ist eine solche 6D Vermessung im Steuerungssystem implementiert, so kann eine Fahrplanung (in Bezug auf Anfahr- oder Abfahrtsweg der Flugzeugbrücke) in 6D erfolgen, und zwar insbesondere unter (vereinfachender) Berücksichtigung von physikalischen Randbedingungen, sogenannter "constraints" (z.B.: Türkanten verlaufen senkrecht; Bodenhöhe des Flugzeugs ist bekannt; etc.). Bei einer solchen Fahrplanung kann eine IST- mit einer SOLLPosition vom Steuerungssystem verglichen, eine Abweichung / ein Fehler berechnet, und hieraus entsprechende Steuersignale erzeugt werden (und zwar im "Arbeitsraum", also z.B. in den Einheiten Meter oder Grad).

Eine direkte Messung kann auf Basis der 2D-Bilddaten zwar nur in 2D erfolgen, aber hieraus können unter Anwendung des Strahlensatzes bei Kenntnis bestimmter geometrischer Größen **(z.B.** Höhe der Flugzeugtür in Metern) auch absolute Messwerte in 3D **(z.B.** 3D-Abstand zwischen Kamerasensor und Flugzeugtür in Metern) bestimmt werden. Eine Rotation kann **z.B.** über die Bestimmung einer affinen Transformation einer bekannten Form **(z.B.** ein Oval eines Flugzeugfensters) abgeleitet werden.

Ergänzend oder aber alternativ hierzu kann aber auch eine bloß relative Vermessung (oben / unten, links / rechts) der anzufahrenden Türposition in Bezug auf eine konfigurierte Zielposition im Sensorraum (insbesondere im Bildraum) erfolgen - ein Ansatz der unter dem Begriff des "visual servoing" bekannt ist. Bei diesem Ansatz wird der Bildsensor des Kamerasystems zusammen mit der Flugzeugbrücke "relativ" (z.B. hoch/runter, links/rechts) zur anzufahrenden Flugzeugtür (d.h. relativ zur Bildmessung) vom Steuerungssystem verfahren (also z.B. hoch/runter oder links/rechts). Weitere notwendige Größen können dabei entweder aus bekannten physikalischen Randbedingungen (sog. "constraints", wie z.B.: Öffnung kann nur parallel zur bekannten Flugzeugposition verfahren werden, Höhe des Flugzeuges über dem Boden ist bekannt, etc.) oder aus dedizierten Schätzern **(z.B.** Ermittlung des Abstands zur Tür per Strahlensatz auf Basis bekannter Türhöhe und sensorisch gemessener Höhe in Pixeln) bestimmt werden.

Beim "visual servoing"-Ansatz, der nur für das Kamerasystem relevant ist, geschieht eine Korrektur somit innerhalb des Bildraums ohne Kenntnis der "echten" Situation im Arbeitsraum. D.h., das Steuerungssystem vermisst relative Abstände im Bildraum und weiß danach, in welcher Richtung die Flugzeugbrücke verfahren werden muss (z.B. "5 Pixel nach links"). Hierbei muss es keine Zurückrechnung in den kartesischen, echten Arbeitsraum geben. Dieser Ansatz ist erfolgsversprechend, wenn der Bildsensor des Kamerasystems geeignet an der Flugzeugbrücke positioniert werden kann (z.B. in der Mitte der Decke eines Lauftunnels der Flugzeugbrücke, achsenparallel ausgerichtet und mit einem Neigungswinkel auf die Mitte der Flugzeugtür zielend), sodass die Mitte der anzufahrenden Flugzeugtür näherungsweise in die Bildmitte rückt, und bietet sich insbesondere für eine Feinfahrt während der zweiten Phase II an, wie zuvor erläutert. Denn in einem solchen Fall kann zuverlässig vom Steuerungssystem bestimmt werden, ob die Flugzeugbrücke (genauer deren vorderste Spitze) nach "links / rechts" und/oder "vor / zurück" verfahren werden muss.

Es kann demnach vorgesehen sein, dass bei dem Verfahren das Steuerungssystem, zumindest zeitweise, auf Basis der Live-2D-Bilddaten die Steuersignale unter Anwendung eines visual servoing Ansatzes erzeugt, bei welchem relative Abstände zwischen der Flugzeugbrücke und dem Flugzeug in einem Bildraum der Live-2D-Bilddaten ermittelt werden. Gleichzeitig kann das Steuerungssystem eine räumliche Position und Orientierung des Flugzeugs anhand der 3D-LIDAR-Messdaten fortlaufend ermitteln und hieraus eine Schätzung der aktuellen Position und Orientierung der Flugzeugtür in 6D errechnen und diese 6D-Pose-Schätzung bei der Erzeugung der Steuersignale mit berücksichtigen.

Ein wesentlicher Vorteil des erfindungsgemäßen Ansatzes besteht darin, dass nicht länger geschultes Personal über weite Wege des Flughafens bis zur Flugzeugbrücke eilen muss, weil die Flugzeugbrücke autonom die Flugzeugtür des wartenden Flugzeugs bis in eine finale Endposition der Flugzeugbrücke (relativ zum Flugzeug) anfahren kann. Dadurch können Verzögerungen, die die Abfertigung des Flugzeugs behindern, wirksam vermieden werden, was von großem Vorteil für einen reibungslosen Flughafenbetrieb ist. Der Beginn des autonomen An- oder Abfahrens des Flugzeugs durch die Flugzeugbrücke kann dabei über eine entsprechende Steuerfunktion entweder durch Boden-Personal vor Ort oder aus der Ferne, beispielsweise von einem Flughafen-Kontrollzentrum aus, initiiert werden. Gerade beim Abfahren des Flugzeugs kann die Personensicherheit im Umfeld der Flugzeugbrücke durch weitere rückwärts blickende Sensorik an der Flugzeugbrücke sichergestellt werden.

Das Flugzeug kann beispielsweise ein Passagier-Flugzeug oder aber ein Frachtflugzeug sein und entsprechend kann die Flugzeugbrücke in Form einer Fluggastbrücke ("passenger boarding bridge") ausgestaltet sein und dann einen Laufweg / Lauftunnel bieten, über welche Passagiere das Flugzeug verlassen oder in das Flugzeug einsteigen können, jeweils durch die Flugzeugtür.

Oder aber die Flugzeugbrücke ist als Transportbrücke ausgestaltet und kann dann als Entlade-/Beladebrücke zum Entladen/Beladen von Transportgütern aus/in ein Fracht- oder Passagierflugzeug genutzt werden. Zu diesem Zweck kann eine solche Transportbrücke beispielsweise ein Fracht-Förderband aufweisen, über welches die Fracht abtransportiert wird.

Und entsprechend kann es sich bei der Flugzeugtür entweder um eine Kabinentür handeln, die dann Zugang zu einem für Personen vorgesehenen Passagierraum des Flugzeugs bietet oder aber um eine Frachttür, welche Zugang zu einem Transportraum des Flugzeugs bietet, in welchen Transportgüter als zu transportierende Fracht geladen werden können. In beiden Situationen lässt sich das erfindungsgemäße Verfahren einsetzen. Die Steuersignale können dabei sowohl Motorsignale umfassen, mit denen ein Fahrantrieb eines Fahrwerks der Flugzeugbrücke betrieben wird, als auch beispielsweise Ansteuersignale, die dem Ansteuern von Aktuatoren der Flugzeugbrücke dienen, etwa um eine Höhe oder Ausrichtung eines vorderen Endes der Flugzeugbrücke mit Hilfe der Aktuatoren situationsgerecht anzupassen.

Eine besonders geeignete Schnittstelle, über die die vom intelligenten Steuerungssystem erzeugten Steuersignale an die Flugzeugbrücke übergeben werden können, ist die einer bereits vorhandenen manuellen Bedieneinheit der Flugzeugbrücke (z.B. Joystick oder andere manuelle Bedienelemente wie z.B. Druckknöpfe). Denn so können die Steuersignale eine vorhandene Sicherheitsimplementierung in einer Steuerungselektronik der Flugzeugbrücke nicht umgehen, sondern diese kann weiter genutzt werden. D.h. die Sicherheitsimplementierung kommt dann weiterhin zum Tragen, wenn die Flugzeugbrücke autonom von dem intelligenten (KI-basierten) Steuerungssystem verfahren wird und dabei die Steuersignale über die vorhandene Schnittstelle übergeben werden. Die Flugzeugbrücke kann dabei - wie im Stand der Technik üblich - über ein herkömmliches internes Steuersystem, insbesondere auf Basis eines PLC-Reglers (dieser kann unter Umständen eine Geschwindigkeits- oder Positionsregelung implementieren), verfügen. Dies zeigt, dass ein erfindungsgemäßes intelligentes Steuerungssystem als übergeordnete Instanz mittels der erzeugten Steuersignale auf das interne Steuersystem der Flugzeugbrücke einwirken kann, anstelle des sonst üblichen menschlichen Bedieners.

Wie erwähnt sind sowohl das LIDAR-Sensorsystem als auch das Kamerasystem bevorzugt an der Flugzeugbrücke selbst montiert (idealerweise oberhalb, unterhalb, oder neben einem vorderen Ende der Flugzeugbrücke), sodass sich beide Systeme mit der Flugzeugbrücke mitbewegen, wenn diese selbsttätig verfährt. Die genaue Sensorposition und Orientierung in Bezug auf die Flugzeugbrücke kann dabei entweder aus der Konstruktion der Flugzeugbrücke und präzisen Montage des jeweiligen Sensors bekannt sein oder sie kann durch ein geeignetes Messverfahren nach der Montage kalibriert werden.

Das vorgeschlagene Verfahren kann wenigstens ein künstliches Neuronales Netz (NN) als Teil einer/der künstlichen Intelligenz (KI) des Steuerungssystems einsetzen, insbesondere um ein Auffinden und Verfolgen der Flugzeugtür des Flugzeugs in Echtzeit zu ermöglichen. Wenn hierin von einem NN gesprochen wird, so kann dieses bevorzugt als ein "Deep Neural Network" (DNN) realisiert sein, also als ein künstliches NN mit mehr als einer versteckten Schicht ("hidden layer").

Hierbei kann das NN beispielsweise so ausgestaltet sein, dass es Flächen und Konturen in dem mit der Kamera erfassten 2D-Bildstrom erkennen kann (insbesondere mittels einer Bildsegmentierung, die noch genauer erläutert wird), beispielsweise um hierauf basierende 6D-POSE-Schätzungen der Objekte zu errechnen. Parallel hierzu kann das Steuerungssystem, ebenfalls in Echtzeit, ein unabhängiges direktes Auffinden und Verfolgen der Kontur der Flugzeugtür in einem Strom von 3D-LIDAR-Scans des LIDAR-Sensorsystems implementieren, um hieraus separate und unabhängige 6D-POSE-Schätzungen zu ermitteln. Damit kann die Robustheit des "tracking" verbessert werden. Das Steuerungssystem kann somit die 2D-Bilddaten einer intelligenten Bildsegmentierung unterziehen, um in den 2D-Bilddaten Objekte zu erkennen. Dies kann dann z.B. für eine genaue Positionsbestimmung der Flugzeugtür genutzt werden.

Ferner kann das Steuerungssystem alternativ oder ergänzend eine Position der Flugzeugtür indirekt schätzen, und zwar auf Basis einer Verfolgung des Körpers des anzufahrenden Flugzeugs (= Flugzeugkörper - dieser kann hinsichtlich der Flugzeugtürposition im Model bekannt sein) in den Live-3D-LIDAR-Messdaten (= fortlaufend / kontinuierlich durchgeführte 3D-LIDAR-Scans).

Die Kombination der beiden oben genannten unabhängigen Pose-Schätzungen kann dabei als Grundlage für einen sicheren autonomen Betrieb der Flugzeugbrücke dienen, der eine Sicherheitszertifizierung (z.B. nach PL/D, SIL) erfüllt.

Das erfindungsgemäße Verfahren lässt sich noch weiter ausgestalten, wie es in den Unteransprüchen beschrieben ist:
So ist es vorteilhaft, wenn die beiden unabhängigen Kontrollsignale noch vor Erzeugung der Steuersignale einer Computer-implementierten Konsistenzprüfung unterzogen werden, um auf diese Weise die Sicherheit zu erhöhen. In der Konsistenzprüfung wird dabei vom Steuerungssystem überprüft, ob das jeweilige Bild, welches die beiden Sensorsysteme liefern, plausibel ist oder Inkonsistenzen zwischen beiden Systemen bestehen. In letzterem Fall stoppt das Steuerungssystem die Erzeugung der Steuersignale zumindest zeitweise, bis die Inkonsistenz beseitigt ist. Je nach implementiertem Sicherheitskonzept kann dies auch so aussehen, dass das Steuerungssystem bei anhaltender Inkonsistenz einen Sicherheitsstopp ausführt, die Flugzeugbrücke dabei anhält und erst in Reaktion auf eine menschliche Eingabe, den autonomen Fahrbetrieb wiederaufnimmt. Eine solche menschliche Eingabe kann beispielsweise je nach Ausgestaltung auch per remote erfolgen, beispielsweise durch Personal in einem Flughafentower, oder aber von Bodenpersonal vor Ort (z.B. durch Drücken einer Bestätigungstaste). Das Bodenpersonal kann beispielsweise überprüfen, ob das Steuerungssystem durch ein vorbeifahrendes Flugzeug kurzeitig irritiert war, oder ob eine Linse des Kamerasystems verschmutzt ist oder dergleichen mehr.

Die erste und die zweite Datenleitung können jeweils so eingerichtet sein, dass diese in Echtzeit voneinander unabhängige, initiale Schätzungen einer (jeweiligen) 6D-POSE der Flugzeugtür erzeugen. Diese initialen Schätzungen bilden dann die Grundlage für die Erzeugung der Steuersignale und/oder für die Implementierung einer initialen Registrierung (wie noch genauer erläutert wird). Durch diesen Ansatz können strenge Sicherheitsanforderungen erfüllt werden, wie sie sich beispielsweise aus der Sicherheits-zertifizierung PL/D, SIL ergeben. Eine solche initiale Pose-Schätzung (insbesondere als Grundlage eines nachfolgenden optischen "Tracking") kann (sowohl für das Kamerasystem als auch für das LIDAR-Sensorsystem) entweder auf einer externen Information beruhen (z.B. bestimmtes "constraint" wie bekannte Parkposition des Flugzeugs; oder beispielsweise Sensordaten von Encodern der Flugzeugbrücke, welche einen Rückschluss auf deren Positionierung oder bestimmte Winkel erlauben) oder sie kann von einem (Bilddaten basierten) "object detector" des Steuerungssystems geliefert werden, wofür insbesondere ein NN eingesetzt werden kann.

Das Steuerungssystem kann so eingerichtet sein, dass beim Erzeugen der Steuersignale von diesem ein 3D-Modell des Flugzeugs mit berücksichtigt wird, und zwar vorzugsweise durch Registrierung der Live-3D-LIDAR-Messdaten des LIDAR-Sensorsystems auf das 3D-Modell. Ein solches 3D-Modell kann z.B. ein digitales CAD-Modell des Flugzeugs sein (z.B. in Form einer vereinfachten digitalen Konstruktionszeichnung) oder eine hinterlegte und annotierte, zuvor aufgenommene 3D-Punktwolke eines bestimmten Flugzeug-Typs. Unter Annotierung wird hier verstanden, dass bestimmte Objekte (z.B. die anzufahrende Flugzeugtür) in der aufgenommenen 3D-Punktwolke markiert sind. Unter vorheriger Aufnahme wird hier verstanden, dass z.B. ein Flugzeug dieses Typs zuvor an einem stationären LIDAR-Scanner (dies kann insbesondere ein LIDAR-Scanner der Flugzeugbrücke sein!) vorbei bewegt/gefahren wurde, um die 3D-Punktwolke und damit Modelldaten zu erfassen.

Ein solches 3D-Modell des Flugzeugs kann vom Steuerungssystem dazu eingesetzt werden, die Live-3D-Messdaten des LIDAR-Sensorsystems abzugleichen, um so das 3D-Modell akkurat in einem virtuellen Weltmodell der Flugzeugbrücke zu verorten. Hieraus kann das Sensorsystem dann beispielsweise eine Relativposition zwischen der Flugzeugbrücke und dem Flugzeug abschätzen.

Dabei kann auch ein Flugzeugtyp des Flugzeugs vom Steuerungssystem selbst bestimmt werden oder von einer externen Quelle abgerufen werden oder der Flugzeugtyp wird von einer externen Quelle an das Steuerungssystem übermittelt. In all diesen Fällen kann das Steuerungssystem anhand des ermittelten Flugzeugtyps das 3D-Modell des in der Warteposition abgestellten Flugzeugs selbst erzeugen. Hierzu kann das Steuerungssystem insbesondere CAD-Daten (des betroffenen Flugzeugtyps) von einer externen Datenbank abrufen.

Die Bestimmung des Flugzeugtyps, die idealerweise vor dem eigentlichen autonomen Verfahren der Flugzeugbrücke erfolgt, kann somit auf einer externen Information (z.B. Modellnummer des parkenden Flugzeugs, die von Flughafenzentrale geliefert wird) beruhen oder aber auf einer Klassifizierung, die das Steuerungssystem selbständig durchgeführt hat. Bei einer solchen Klassifizierung kann insbesondere ein künstliches NN und/oder ein Entscheidungsbaum ("decision tree"; dieser kann auch zuvor erhobene Flugzeugmodelldaten berücksichtigen) und/oder ein "random forest"-Klassifikator zum Einsatz kommen. Mit anderen Worten kann die Klassifizierung des geparkten Flugzeugs mittels einer künstlichen Intelligenz (KI) und/oder mittels einer Methode des maschinellen Lernens vom Steuerungssystem vorgenommen werden.

Um das 3D-Modell des Flugzeugs zu erhalten, können beispielsweise einzelne Flugzeuge eines bestimmten Typs mittels eines optischen Scanners einmalig optisch erfasst und die Scan-Daten ("3D-Punktwolke") in einer Datenbank hinterlegt werden.

Der Ansatz der Berücksichtigung eines 3D-Modells, welches für einen bestimmten Flugzeug-Typ spezifisch ist, hat den wesentlichen Vorteil, dass die (jeweilige/individuelle) Flugzeugbrücke / deren intelligentes Steuerungssystem nicht mehr auf ein spezifisches Flugzeug trainiert werden muss oder auf eine bestimmte Be-/Entladesituation. Vielmehr genügt es, wenn das Steuerungssystem das (beispielsweise aus einer zentralen Wissensbasis/Datenbank bezogene) 3D-Modell mittels LIDAR-Messdaten bestmöglich virtuell in einem (virtuellen) Weltmodell platziert.

Im Grunde weiß das Steuerungssystem somit zunächst nicht, wonach es Ausschau halten soll, bis es das Modell des Flugzeugs abgerufen / erzeugt hat. Hierbei kann das 3D-Modell insbesondere eine relative Verortung der Flugzeugtür zu anderen Objekten innerhalb des Modells ermöglichen, was das präzise Anfahren der Flugzeugtür durch die Flugzeugbrücke wesentlich erleichtert. Entsprechend ist der Ansatz, dass das intelligente Steuerungssystem spezifische 3D-Modelldaten des anzufahrenden Flugzeugtyps berücksichtigt, hervorragend geeignet, unterschiedlichste Typen/Arten von Flugzeugen sicher im Raum zu verorten und damit präzise anzufahren. Aufgrund der Vielfalt an Flugzeug-Typen, die auf zivilen Flughäfen anzutreffen sind, ist dies von großem Vorteil. Das Steuerungssystem kann somit eine zunächst noch unbekannte, aber real mit dem LIDAR-Sensorsystem gemessene 3D-Punktwolke mit dem abgerufenen 3D-Modell des Flugzeugs registrieren. Diese kann insbesondere im Rahmen einer Optimierungsschleife, also iterativ, erfolgen bis eine erforderliche Genauigkeit erzielt ist.

Die einzelnen Verfahrensschritte, die bei der sensorischen Erfassung des Flugzeugs und der anschließenden relativen Positionierung der Flugzeugbrücke relativ zum Flugzeug durchlaufen werden, können beispielsweise wie folgt sein:
1.) Initialisierung und Objekterkennung: In diesem Schritt wird das abgerufene/erzeugte 3D-Modell des geparkten Flugzeugs vom Steuerungssystem einem bestimmten Objekt (nämlich dem real existierenden Flugzeug) innerhalb eines Scanbereichs des LIDAR-Sensorsystems zugeordnet.
2.) Registrierung: Bei der LIDAR-Daten-Verarbeitung bezieht sich die Registrierung auf den Prozess der Ausrichtung und Integration mehrerer LIDAR-Punktwolken in ein gemeinsames Koordinatensystem. Dabei wird eine Optimierungsschleife durchlaufen, die der möglichst genauen Positionierung des 3D-Modells des Flugzeugs innerhalb eines Koordinatensystems der Flugzeugbrücke dient.
3.) Tracking: In diesem Schritt berechnet das Steuerungssystem eine neue Position eines in den Messdaten erkannten Objekts, insbesondere der anzufahrenden Flugzeugtür, und zwar auf Basis einer zuvor ermittelten (älteren) Position/POSE des jeweiligen Objekts und einer Bewegungsabschätzung des Objekts ("motion estimate"). Hierbei kann ein Kalman Filter zum Einsatz kommen, der eine Prognose einer zukünftigen Position liefert (genauer: eine Schätzung einer nicht direkt messbaren Systemgröße).
4.) Erzeugen der Kontrollsignale und hieraus der Steuersignale und autonomes Verfahren der Flugzeugbrücke und/oder Ändern einer Ausrichtung des vorderen Endes der Flugzeugbrücke mit Hilfe von Aktuatoren (auch dies kann als "verfahren" im Sinne der Erfindung verstanden werden), und zwar jeweils relativ zu dem nun im Weltmodell des Steuerungssystems akkurat platzierten 3D-Modells des Flugzeugs. Bei diesem Schritt vergleicht das Steuerungssystem eine aktuell ermittelte relative Position der Flugzeugbrücke (relativ zum Flugzeug) mit einer Zielposition und generiert hieraus die Steuersignale und leitet diese der Aktorik der Flugzeugbrücke zu (sodass eine gewünschte Bewegung der Flugzeugbrücke erfolgt, die LIVE vom Steuerungssystem mit Hilfe der Sensorik (Kamera + LIDAR) als Relativbewegung erfasst wird). Bei diesem Schritt kann ein Transformationsbaum der Flugzeugbrücke zum Einsatz kommen, der die möglichen Bewegungen der Flugzeugbrücke und mögliche Gelenkkonfigurationen der Flugzeugbrücke beschreibt. Die momentane Gelenkkonfiguration der Flugzeugbrücke kann dabei kontinuierlich über entsprechende Encoder und/oder Abstands- und Winkelsensoren (der Flugzeugbrücke) vom Steuerungssystem erfasst werden.

Die autonom ausgeführte Bewegung des vorderen Endes der Flugzeugbrücke, die auf Basis der vom Steuerungssystem erzeugten Steuersignale (= Stellgrößen) geschieht, kann somit auf einer kontinuierlichen computer-implementierten Analyse der Live-2D-Bilddaten und der Live-3D-LIDAR-Messdaten beruhen. Dadurch wird auch eine "closed-loop" gebildet, weil das Steuerungssystem die gerade ausgeführte Bewegung live sieht (mittels der Kamera und mittels LIDAR), wodurch Ungenauigkeiten zwischen Sensorik und Aktorik in Echtzeit ausgeglichen werden können.

Das autonome Verfahren und/oder Ansteuern der Aktorik der Flugzeugbrücke geschieht dabei bevorzugt erst nachdem die (virtuelle) Position des 3D-Modells innerhalb des eigenen Koordinatensystems der Flugzeugbrücke/des Steuerungssystems mit Hilfe des LIDAR-Sensorsystems in Schritt 2) optimiert wurde;
5.) Sobald das vordere Ende der Flugzeugbrücke eine finale Endposition im Abstand von wenigen cm von der anzufahrenden Flugzeugtür erreicht hat (Das Erreichen dieser Endposition bzw**.** dieses "Zielabstands" zum Flugzeug kann beispielsweise vom LIDAR-Sensorsystem direkt oder von einem anderen, unabhängigen Abstandssensor detektiert werden), kann das Steuerungssystem in einen Wartezustand wechseln und ein entsprechendes Ausgabesignal (z.B. optisch oder akustisch) erzeugen. Dieses Ausgabesignal signalisiert dann dem Bodenpersonal, dass die Flugzeugbrücke die finale Endposition sicher erreicht hat und entsprechend kann dann manuell die Flugzeugtür geöffnet werden (sofern sie nicht bereits geöffnet war) und der zwischen Flugzeugbrücke und Flugzeug verbliebene Spalt kann über entsprechende mechanische Überbrückungsmittel vom Boden-Personal geschlossen werden. Anschließend können Passagiere aussteigen oder es können Transportgüter durch die Flugzeugtür auf die Flugzeugbrücke entladen werden, z.B. auf ein Förderband der Flugzeugbrücke.

Der Flugzeugtyp des Flugzeugs kann insbesondere auf Basis einer Computer-implementierten Klassifizierung vom Steuerungssystem selbst bestimmt werden. Dies kann bevorzugt unter Einsatz eines neuronalen Netzes (NN) und/oder durch Auswertung der Live-2D-Bilddaten des Kamerasystems erfolgen. Für die gewünschte Klassifizierung ist es ferner hilfreich, wenn hierzu einzelne Objekte des Flugzeugs, insbesondere die Flugzeugtür und/oder ein Türrahmen der Flugzeugtür, in den Live-2D-Bilddaten identifiziert werden, damit die Klassifizierung die so identifizierten Objekte analysieren kann. Besonders bevorzugt ist es dabei, wenn diese Identifizierung der Objekte auf einer vorherigen Bildsegmentierung und/oder auf einer Merkmalspunktmarkierung beruht.

Die Klassifizierung des Flugzeugtyps (bzw. der hierzu eingesetzte Klassifikator) kann zum Beispiel als Teil eines im Steuerungssystem implementierten NN realisiert sein (es kann z.B. ein einzelnes Neuron auf die korrespondierende Klasse trainiert sein) oder aber als ein eigenständiges Netzwerk, beispielsweise als ein "convolutional neural network" (CNN).

Als zu identifizierende Objekte können auch andere visuell mittels der 2D-Bilddaten gut erkennbare Merkmale verwendet werden, wie beispielsweise Ecken von Fenstern, Griffe, oder auch Aufdrucke. Eine Merkmalspunktmarkierung kann z.B. mittels einer "bounding box" erfolgen, die die Umrisse des jeweiligen Objekts markiert, oder mittels einer Mittelpunktmarkierung, die den Mittelpunkt des jeweiligen Objekts markiert.

Die erwähnte Segmentierung der 2D-Bilddaten, die sowohl Konturen als auch Flächen von Objekten betreffen kann, kann in vorteilhafter Weise durch ein "deep neural network (DNN)" bewerkstelligt werden, welches vom Steuerungssystem implementiert wird. Dieses DNN erwartet als Eingabe ein Bild und gibt ein segmentiertes Bild aus, wobei jedes Pixel des Eingabe-Bilds einer Objektklasse zugeordnet wird. Dadurch entstehen zusammenhängende Konturen/Flächen. Damit können Objekte wie die Flugzeugtür, deren Rahmen oder eine Türverriegelung, aber auch sonstige Fenster, die Außenhülle des Flugzeugs, sein Fahrwerk, Flügel, Triebwerke, Leitflächen, etc. vom Steuerungssystem autonom identifiziert werden.

Wie eingangs erwähnt, kann die auf intelligenter Segmentierung der 2D-Bilddaten des Kamerasystems basierende Objekterkennung (optional) in vorteilhafter Weise vom Steuerungssystem eingesetzt werden, um die Position des jeweiligen Objekts, insbesondere eine Position der Flugzeugtür, aus den 2D-Bilddaten zu ermitteln. Diese Positionen können vorzugsweise in Form einer 6D-POSE-Schätzung bestimmt werden.

Darüber hinaus kann das Steuerungssystem die 2D-Bildsegmentierung auch dazu einsetzen, die Position des jeweiligen Objekts, insbesondere eine Position der Flugzeugtür, in den Live-3D-Messdaten des LIDAR-Sensorsystems zu initialisieren und entsprechend eine von den Live-2D-Bilddaten unabhängige POSE-Schätzung des jeweiligen Objekts / der Flugzeugtür auf Basis der LIDAR-Live-3D-Messdaten zu ermitteln. Somit kann das Steuerungssystem dazu eingerichtet sein, ein mit dem LIDAR-Sensorsystem ausgeführtes LIDAR-Tracking auf Basis der 2D-Bilddaten des Kamerasystems zu initialisieren, insbesondere um hieraus eine initiale POSE-Schätzung der Flugzeugtür zu erhalten.

Darüber hinaus ist es auch möglich, ein NN einzusetzen, um direkt in den LIVE erfassten LIDAR-Messdaten Oberflächen des Flugzeugs und damit relevante Objekte zu erkennen.

Die erwähnte Klassifizierung kann auch vom Steuerungssystem dazu eingesetzt werden, ein spezifisches künstliches NN (= künstliche Intelligenz = KI) anhand des bestimmten Flugzeugtyps aus einer Datenbank zu laden. Mit Hilfe der geladenen KI/des geladenen kNN, die/das speziell auf den Flugzeug-Typ zugeschnitten ist, kann dann das Steuerungssystem die gewünschte autonome Steuerung der Flugzeugbrücke mit der erforderlichen Robustheit und Zuverlässigkeit sicher durchführen.

Eine/die vom Steuerungssystem implementierte Bildsegmentierung der Live-2D-Bilddaten kann insbesondere auf einem neuronalen Netz basieren, welches einem Autoencoder ähnelt (dieses NN weist eine zu einem Autoencoder nahezu identische Topologie auf, aber die Ausgabe des NN ist nicht das Eingangsbild, sondern das gewünschte segmentierte Bild), und/oder auf einem neuronalen Netz mit einer U-NET-Architektur und/oder auf einem "convolutional neural network (CNN)". U-Net ist eine bestimmte Netzwerktopologie, die einem Autoencoder ähnlich ist und zusätzliche "Shortcut-Verbindungen" jeweils von einer Encoderzur einer korrespondierenden Decoderschicht aufweist. Eine NN mit U-Net Architektur kann somit als eine mögliche Ausgestaltung eines Autoencoder-ähnlichen NN verstanden werden. Solche Ansätze sind besonders robust und können vom Steuerungssystem insbesondere eingesetzt werden, damit eine vom Steuerungssystem implementierte Positionsbestimmung der Flugzeugtür diese vorsegmentierten Live-2D-Bilddaten verarbeiten kann. Vorteilhaft an der Nutzung der zuvor beschriebenen NN ist deren Robustheit und der Umstand, dass so nur eine reduzierte Menge an Trainingsdaten benötigt wird, um die gewünschte korrekte und hochgenaue Segmentierung der Live-2D-Bilddaten zu bewerkstelligen. Durch geeignete Wahl der Topologie (Anzahl der Schichten; Anzahl der Neuronen je Schicht; Anpassung der verwendeten Aktivierungs- und Trainingsfunktionen) des NN, welches die Bildsegmentierung implementiert, können Leistungsparameter wie räumliche Auflösung, Geschwindigkeit, Bildkomplexität gezielt an die Aufgabenstellung angepasst werden.

Wie erwähnt kann das Steuerungssystem POSE-Schätzungen von einzelnen Objekten des Flugzeugs, insbesondere von der Flugzeugtür, unter Annahme von physikalischen Randbedingungen ("constraints") treffen. Solche "constraints" können beispielsweise die Annahme sein, dass der Rücken des Flugzeugs horizontal verläuft oder beispielsweise eine Annahme in Bezug auf einen bestimmten Raumwinkel, eine bestimmte Form oder ein bestimmtes Maß einer identifizierten Fläche des Flugzeugs.

Das Steuerungssystem kann auch wenigstens eine 6D-POSE-Schätzung von einem Objekt des Flugzeugs treffen, wobei diese Schätzung auf wenigstens einer schwachen Annahme beruhen kann, die auf Basis von Qualitätskriterien (vom Steuerungssystem) auch wieder verworfen werden kann. Solche schwachen Annahmen ("limited assumptions") können beispielsweise auf einer zufälligen Schätzung unter Berücksichtigung von "constraints" beruhen.

Das Steuerungssystem kann auch wenigstens eine 6D-POSE-Schätzung von einem Objekt des Flugzeugs treffen, wobei diese Schätzung auf wenigstens einer starken Annahme beruht, die eine Position des Flugzeugs oder eine Konfiguration der Flugzeugbrücke betrifft. Solche starken Annahmen ("strong assumptions") können beispielsweise sein: die bekannte Parkposition des Flugzeugs oder eine bekannte Konfiguration der Flugzeugbrücke (insbesondere Annahmen zu Gelenkwinkeln).

Eine weitere sehr robuste Ausgestaltung des Verfahrens sieht vor, dass eine vom Steuerungssystem ermittelte oder aber von außen vom Steuerungssystem abgerufene initiale POSE-Schätzung eines vom Steuerungssystem identifizierten Objekts des Flugzeugs mithilfe eines iterativen Algorithmus verbessert wird. Dieser Algorithmus kann insbesondere ein "iterative-closest-point(ICP)"-Algorithmus sein. Dieser Ansatz ist hilfreich, um die Genauigkeit bei der Bestimmung einer Position der Flugzeugbrücke relativ zum Flugzeug entscheidend zu verbessern. Dieser Algorithmus kann somit im Rahmen einer Optimierungsschleife dazu dienen, das abgerufene 3D-Modell des Flugzeugs mit den 3D-LIDAR-Live-Messdaten zu registrieren, um hieraus die Position des Flugzeugs relativ zur Fahrgastbrücke mit hoher Genauigkeit zu ermitteln. Mithilfe eines solchen Algorithmus/eines solchen iterativen Optimierungsverfahrens kann insbesondere das LIDAR-Sensorsystem in die Lage versetzt werden, ein konkretes Objekt zu verfolgen ("LIDAR tracking"). Dieses LIDAR-tracking kann beim autonomen Verfahren der Flugzeugbrücke kontinuierlich fortgeführt werden, um so die vom Verfahren herrührende Verschiebung der Modellposition in nachfolgenden LIDAR-Messungen nachzuführen.

Das Verfahren kann insbesondere vorsehen, dass die Flugzeugbrücke auf Basis relativer Positionen (relativ zum geparkten Flugzeug) verfahren wird. Das Steuerungssystem kann somit die Flugzeugbrücke auf Basis von relativen Positionen zwischen einem vorderen Ende der Flugzeugbrücke und dem Flugzeug verfahren, welche relative Positionen das Steuerungssystem anhand der Live-2D-Bilddaten ermittelt. Diese relativen Positionen werden somit im Bildraum ermittelt und somit benötigt die autonom fahrende Flugzeugbrücke insbesondere keine absoluten Weltkoordinaten, um die gewünschte finale Endposition in unmittelbarer Nähe der Flugzeugtür anzufahren. Dies ist vorteilhaft, da so die Parkposition des Flugzeugs gewisse Schwankungen aufweisen darf, ohne dass dies die Genauigkeit des Anfahrens beeinflusst.

Im Rahmen einer Optimierungsschleife kann das Steuerungssystem dabei iterativ die jeweilige relative Position bzw. die jeweilige relative Pose innerhalb eines Weltmodells der Flugzeugbrücke so lange auf Basis der 3D-LIDAR-Messdaten (die fortlaufend mithilfe des LIDAR-Sensorsystems 9 aufgezeichnet und vom Steuerungssystem in Echtzeit verarbeitet werden) anpassen bis ein Fehler zwischen einer angenommenen momentanen Position des jeweiligen Objekts (zum Beispiel die Flugzeugtür) und den erfassten 3D-LIDAR-Messdaten minimiert ist. Zu diesem Zweck kann der erwähnte ICP-Algorithmus zum Einsatz kommen, mithilfe dessen das jeweilige Objekt mit den 3D-LIDAR-Messdaten registriert werden kann.

Zur Lösung der Aufgabe ist auch die intelligente Flugzeugbrücke gemäß Anspruch 13 vorgesehen, die autonom und selbsttätig umherfahren kann. Hierzu weist die Flugzeugbrücke wie bereits erwähnt eine Aktorik auf. Darüber hinaus ist an der Flugzeugbrücke eine Sensorik angebracht, die somit beim Verfahren der Flugzeugbrücke mit bewegt wird. Diese Sensorik umfasst - dem erfindungsgemäßen Ansatz folgend - ein LIDAR-Sensorsystem zur Erzeugung von Live-3D-LIDAR-Messdaten und ein Kamerasystem zur Erzeugung von Live-2D-Bilddaten. Ferner weist die Flugzeugbrücke ein intelligentes Steuerungssystem auf, welches wie erläutert bevorzugt auf Basis einer künstlichen Intelligenz (KI) implementiert ist. Das intelligente Steuerungssystem dient dazu und ist hierfür eingerichtet, durch Verarbeiten der Live-3D-LIDAR-Messdaten und der Live-2D-Bilddaten jeweils in Echtzeit Steuersignale für die Aktorik zu erzeugen. Sobald die Steuersignale die Aktorik erreichen, wird die Flugzeugbrücke in Bewegung versetzt und so ein vorderes Ende der Flugzeugbrücke relativ zu einer Flugzeugtür eines in einer Warteposition abgestellten Flugzeugs bewegt.

Diese neuartige intelligente Flugzeugbrücke bzw. ihr Steuerungssystem kann selbstverständlich dazu ausgestaltet und eingerichtet sein, ein Verfahren gemäß einem der Ansprüche 1-10 und/oder wie zuvor erläutert zu implementieren.

Es sei auch nochmals erwähnt, dass das intelligente Steuerungssystem der Flugzeugbrücke eine künstliche Intelligenz auf Basis wenigstens eines neuronalen Netzes (NN) umfassen kann. Dieses neuronale Netz kann insbesondere zum Zweck einer bildbasierten Objekterkennung dazu eingerichtet sein, die Live-2D-Bilddaten zu segmentieren, welche von dem Kamerasystem geliefert werden.

Um das Verarbeiten der Daten zu beschleunigen ist es besonders vorteilhaft, wenn das Steuerungssystem über eine Hardware (Berechnungseinheit) verfügt, die auf eine Inferenz von neuronalen Netzen ausgerichtet ist. Zu diesem Zweck kann die Hardware über mehrere parallel arbeitende Prozessoren und/oder über mehrere parallele Verarbeitungspipelines und/oder über für diesen Zweck optimierte Befehlssätze verfügen. Diese Hardware ist somit dazu eingerichtet, wenigstens ein neuronales Netz zu implementieren. Mit dem so implementierten NN können Konturen und Flächen von Objekten in den Live-2D-Bilddaten in Echtzeit im Rahmen einer Bildsegmentierung bestimmt werden, wie es zuvor bereits im Detail erläutert wurde. Diese Bildsegmentierung kann insbesondere so ausgestaltet sein, dass das Steuerungssystem auf Basis dieser Bildsegmentierung 6D-POSE-Schätzungen der Objekte in Echtzeit ermitteln kann.

Das Steuerungssystem der Flugzeugbrücke kann bevorzugt dazu eingerichtet sein, aus den Live-3D-Messdaten des LIDAR-Sensorsystems und aus den Live-2D-Bilddaten des Kamerasystems jeweils unabhängige 6D-POSE-Schätzungen von Objekten zu bestimmen und die Steuersignale unter Berücksichtigung solcher unabhängigen 6D-POSE-Schätzungen abzuleiten.

Schließlich schlägt die Erfindung noch ein Nachrüst-Set vor gemäß Anspruch 18, welches bereits eingangs erläutert wurde. Dieses Nachrüst-Set umfasst ein intelligentes Steuerungssystem (welches wie zuvor beschrieben erläutert ausgestaltet sein kann) sowie ein zugehöriges LIDAR-Sensorsystem und ein zugehöriges Kamerasystem. Das Steuerungssystem des Nachrüst-Sets ist dazu eingerichtet, in einer ersten Datenleitung Live-3D-LIDAR-Messdaten des LIDAR-Sensorsystems und in einer zweiten Datenleitung Live-2D-Bilddaten des Kamerasystems jeweils unabhängig voneinander zu jeweiligen unabhängigen Kontrollsignalen zu verarbeiten. Ferner ist das Steuerungssystem dazu eingerichtet, aus den beiden unabhängigen Kontrollsignalen in Echtzeit Steuersignale zu erzeugen, die dazu dienen, die Flugzeugbrücke zu verfahren. Hierbei können die Steuersignale vermittelt durch eine bestehende manuelle Steuerung an die Flugzeugbrücke, genauer deren Aktorik, übertragen werden, damit das Steuerungssystem das Verfahren/Umherfahren der Flugzeugbrücke steuern kann.

Mit anderen Worten können also die Steuersignale, die das intelligente Steuerungssystem erzeugt, so ausgelegt sein, dass diese Steuersignale, vermittelt über eine Schnittstelle einer vorhandenen manuellen Bedieneinheit der vorhandenen Flugzeugbrücke, steuernd auf die Flugzeugbrücke einwirken können, um die Flugzeugbrücke autonom (ohne menschliches Eingreifen) zu verfahren. Durch das Nachrüsten eines erfindungsgemäßen Nachrüst-Sets kann somit eine (eigentlich unintelligente) bestehende Flugzeugbrücke in eine erfindungsgemäße intelligente Flugzeugbrücke (insbesondere wie zuvor beschrieben oder wie hierin beansprucht) überführt werden. Ferner kann das Steuerungssystem selbstverständlich dazu eingerichtet sein (insbesondere mittels entsprechender hardware), ein erfindungsgemäßes Verfahren wie hierin beschrieben auszuführen, um die eingangs genannte Aufgabe zu lösen. Dabei können sämtliche der zuvor erläuterten Detail-Aspekte hinsichtlich Ausgestaltung der NN und/oder 6D-Pose-Schätzungen und/der Flugzeugtyp-Klassifizierung und/oder 2D-Bildsegmentierung implementiert sein.

Die Erfindung wird nun anhand von Figuren und schematischen Diagrammen erläutert, wobei die Figuren lediglich der Erläuterung des erfindungsgemäßen Lösungskonzepts dienen, aber keine realistische Ausgestaltung zeigen. Selbstverständlich sind vielfältige weitere Ausgestaltungen möglich, wie zuvor im Detail erläutert wurde.

Es zeigt:
- Fig. 1: eine Illustration eines auf einer Abstellfläche eines Flughafens geparkten Flugzeugs mit bereits vollständig angedockter selbst fahrender erfindungsgemäßer Flugzeugbrücke,
- Fig. 2: das Flugzeug in der Parkposition, wie es von der intelligenten Flugzeugbrücke mit seinem Kamerasystem beim Anfahren wahrgenommen wird,
- Fig. 3: das Kamerabild aus Fig. 2, nachdem eine künstliche Intelligenz der Flugzeugbrücke darin mehrere Objekte des Flugzeugs identifiziert hat,
- Fig. 4: ein schematisches Flussdiagramm, welches Datenströme innerhalb eines intelligenten Steuerungssystems der erfindungsgemäßen Flugzeugbrücke visualisiert,
- Fig. 5: ein Ablauf-Diagramm zur Erläuterung der Verarbeitung von 3D-LIDAR-Daten durch das intelligente Steuerungssystem,
- Fig. 6: ein Ablauf-Diagramm zur Erläuterung der Verarbeitung von 2D-Bilddaten durch das intelligente Steuerungssystem,
- Fig. 7 und Fig. 8: eine Ausgestaltung des erfindungsgemäßen Verfahrens anhand eines jeweiligen Ablauf-Diagramms, bei dem die Steuersignale während einer ersten Phase I vom LIDAR-System und während einer zweiten Phase II vom Kamera-System bereitgestellt werden.

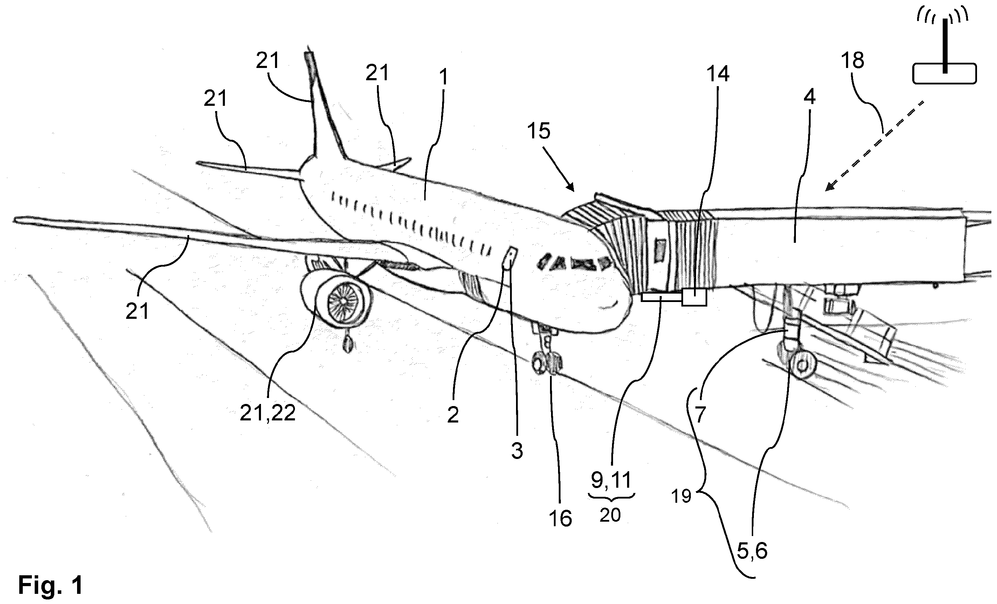

Figur 1 illustriert die typische Situation beim "offboarding"/ Aussteigen von Passagieren aus einer Passagiermaschine: Die Passagiere verlassen das Flugzeug 1 durch eine Flugzeugtür 2 hindurch, die in der Außenhülle des Flugzeugs 1 auf der linken Seite angeordnet ist, und anschließend über eine Flugzeugbrücke 4, die an das Flugzeug 1 angedockt wurde. Zu diesem Zweck muss die Flugzeugbrücke 4 aber zunächst bis auf wenige Zentimeter an die Flugzeugtür 2 des in einer genau festgelegten Parkposition 16 abgestellten Flugzeugs 1 herangeführt werden. Je nach Typ des abgestellten Flugzeugs 1 kann dabei auch die Höhe der Flugzeugtür 2 variieren, sodass mittels entsprechender Hubaktorik 7 auch die Höhe der Flugzeugbrücke 4 angepasst werden muss.

Herkömmliche Flugzeugbrücken 4 weisen zwar einen eigenen Fahrantrieb 6 und entsprechende Aktuatoren 7 auf, sodass die Flugzeugbrücke 4 selbsttätig an das abgestellte Flugzeug 1 heranfahren kann und nicht etwa mittels eines Schleppfahrzeugs dorthin geschoben werden muss. Dieses Anfahren erfolgt aber bislang gesteuert durch menschliches Bodenpersonal. Eine Person erzeugt dann über eine entsprechende manuelle Bedieneinheit der Flugzeugbrücke 4 Steuerbefehle, die die selbstfahrende Flugzeugbrücke 4 in die gewünschte Richtung und/oder Höhe verfahren. Zu diesem Zweck muss aber stets geschultes Bodenpersonal an Ort und Stelle verfügbar sein. Ist dieses Personal jedoch gerade nicht verfügbar, kommt es unweigerlich zu Verspätungen bei der Abfertigung des Flugzeugs. Eine ähnliche Situation kann auch auftreten, wenn mittels einer Flugzeugbrücke 4, die als Transportbrücke zum Transport von Gepäckstücken ausgelegt ist, Gepäckstücke oder sonstige Fracht in den Bauch eines Flugzeugs 1 geladen werden soll.

Von diesem Hintergrund ausgehend schlägt die Erfindung vor, die Flugzeugbrücke 4 mit einem intelligenten Steuerungssystem 14 auszustatten, welches auf Basis eines an der Flugzeugbrücke 4 angebrachten LIDAR-Sensorsystems 9 und eines ebenfalls an der Flugzeugbrücke 4 angebrachten Kamerasystems 11 in der Lage ist, autonom geeignete Steuersignale 8 zu erzeugen, um die Flugzeugbrücke 4 an das Flugzeug 1 heranzuführen, ohne dass dabei Bodenpersonal eingreifen muss, wie es in Figur 1 illustriert ist.

Wie man in Fig. 1 gut erkennt, sind sowohl das LIDAR-Sensorsystem 9 als auch das Kamera-System 11 am vorderen Ende 15 der Flugzeugbrücke 4 in genau bekannter Position montiert, so dass beide Sensorsysteme 9, 11 das Flugzeug 1 von der Seite her in Blick nehmen können, wenn die Flugzeugbrücke 4 autonom auf die Flugzeugtür 2, angetrieben durch den Fahrantrieb 6 ihres selbstfahrenden Fahrwerks 5, zufährt.

Bevor die Flugzeugbrücke 4 dieses autonome Anfahren des Flugzeugs 1 startet, wertet das Steuerungssystem 14 zunächst die vom Kamerasystem 11 gelieferten Live-2D-Bilddaten 12 aus, um den Typ des parkenden Flugzeugs 1 zu bestimmen. Hierzu verfügt das Steuerungssystem 14 über ein neuronales Netz (NN), welches anhand der Live-2D-Bilddaten 12 eine Computerimplementierte Klassifizierung vornimmt und so den Flugzeugtyp des Flugzeugs 1 selbst bestimmt. Zu diesem Zweck werden die 2D-Bilddaten 12 jedoch zuvor einer Bildsegmentierung unterzogen, sodass das Steuerungssystem 14 in den 2D-Bilddaten 12 einzelne Objekte 21 des Flugzeugs 1 wie etwa das Triebwerk 22, das vordere Bugrad, die Kabinentür 2 aber auch die Flügel, die Höhenruder und das Seitenruder identifizieren kann. Alle diese Informationen fließen in die Klassifizierung ein, so dass der Flugzeugtyp aus einer Vielzahl an möglichen Typen genau bestimmt werden kann.

Anschließend übermittelt das Steuerungssystem 14 drahtlos den bestimmten Flugzeugtyp an eine externe Datenbank und ruft von dieser Datenbank ein 3D-Modell 18 des bestimmten Flugzeugtyps in Form von CAD-Daten ab.

Als nächstes ordnet das Steuerungssystem 14 das drahtlos abgerufene 3D-Modell 18 den fortlaufend erfassten Live-3D-LIDAR-Messdaten 10 zu, die mit dem LIDAR-Sensorsystem 9 fortlaufend erfasst werden. Dieser Prozess wird als initiale Registrierung bezeichnet und ermöglicht es, dass 3D-Modell 18 des Flugzeugs 1 innerhalb eines Welt-Koordinatensystems der Flugzeugbrücke 4 möglichst genau anzuordnen. Damit erhält das Steuerungssystem 14 eine Information darüber, in welcher relativen Richtung und Entfernung sich das Flugzeug 1 relativ zur Flugzeugbrücke 4 befindet.

Auf Basis der vorsegmentierten Live-2D-Bilddaten 12 des Kamerasystem 11 kann das Steuerungssystem 14 insbesondere die Flugzeugtür 2 und deren Türrahmen 3 in den Live-2D-Bilddaten 12 identifizieren. Anschließend errechnet das Steuerungssystem 14 eine initiale POSE-Schätzung der räumlichen Lage der Flugzeugtür 2, wobei es dabei zahlreiche physikalische Randbedingungen beachtet wie beispielsweise, dass der Rücken des Flugzeugrumpfs horizontal verläuft (da das Flugzeug 1 auf einer ebenen Fläche geparkt ist). Diese initiale POSE-Schätzung kann auch benutzt werden, um die initiale Registrierung des 3D-Modells 18 in den LIDAR-Messdaten 10 zu bewerkstelligen.

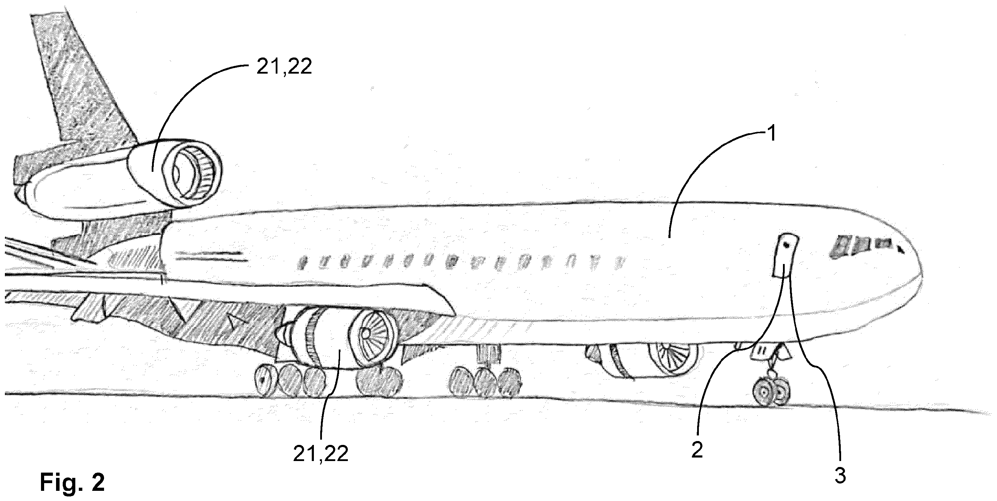

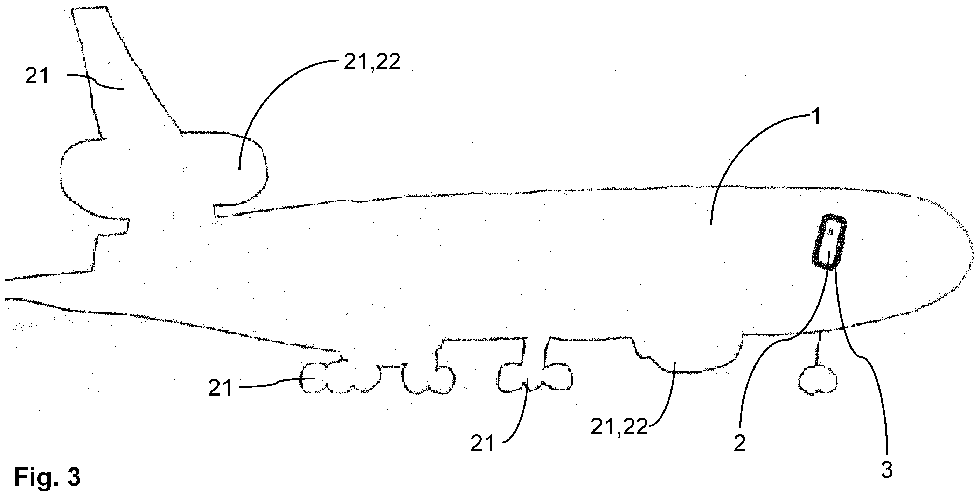

Die Fig. 2 illustriert, wie das Kamerasystem 11 das Flugzeug 1 aus größerem Abstand wahrnehmen kann, während Fig. 3 die Bilddaten zeigt, nachdem die künstliche Intelligenz (KI) des Steuerungssystems 14 die Bilddaten einer Segmentierung unterzogen hat, durch welche jedem Pixel des jeweiligen Bilds eine bestimmte Objektklasse zugeordnet wird. Dadurch kann das Steuerungssystem 14 beispielsweise die genaue Lage des Türrahmens 3 der Flugzeugtür 2 relativ zu sonstigen Objekten 21 des Flugzeugs 1 bestimmen.

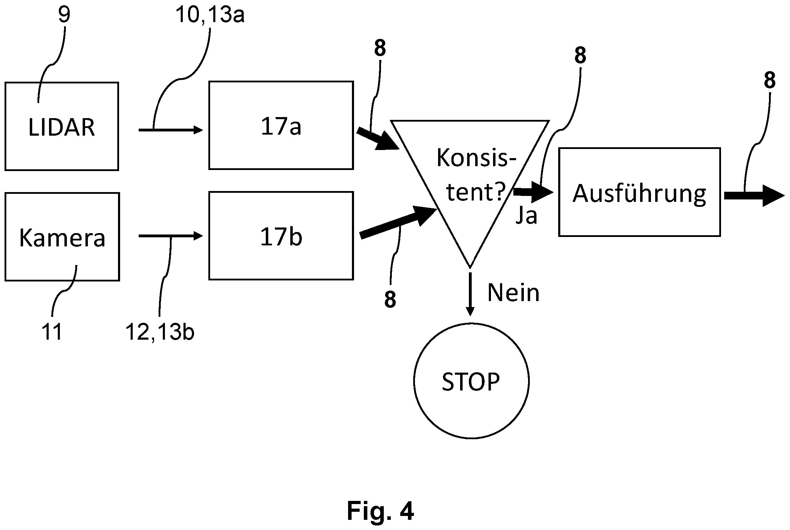

Die Fig. 4 illustriert, wie innerhalb des Steuerungssystems 14 Daten aus zwei parallelen und voneinander unabhängigen Datenleitungen 13a und 13b, nämlich die 2D-Bilddaten 12 des Kamerasystems 11 und die 3D-Messdaten 10 des LIDAR-Sensorsystems 9, fortlaufend zur jeweiligen unabhängigen Kontrollsignalen 17a und 17b in Echtzeit verarbeitet werden. Die Kontrollsignale 17a und 17b werden dabei einer Konsistenzprüfung unterzogen und nur, wenn das Steuerungssystem 14 die Konsistenz der Signale bejaht, werden diese auch tatsächlich in entsprechende Steuersignale 8 umgesetzt, die über eine vorhandene Schnittstelle an das interne Steuersystem der Flugzeugbrücke 4 übergeben werden.

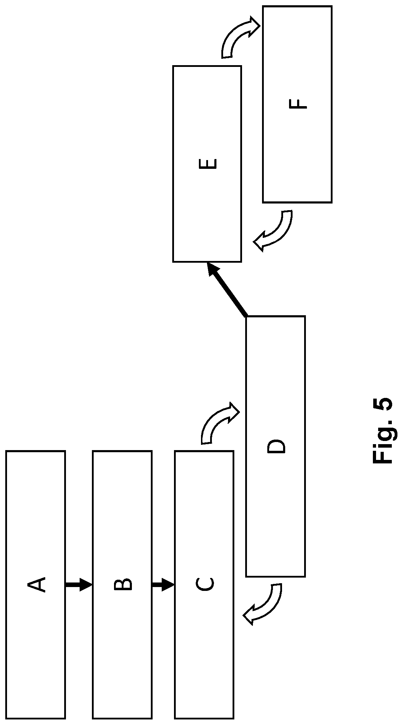

Fig. 5 illustriert dabei die einzelnen Schritte, die innerhalb der LIDAR-Datenleitung 13a ablaufen:
A) Das Steuerungssystem 14 ermittelt die Lage der Flugzeugtür 2 in den vom LIDAR-Sensorsystem 9 gelieferten Live-3D-LIDAR-Messdaten 10 initial;
B) Das Steuerungssystem 14 ermittelt selbstständig den Typ des Flugzeugs 1 und lädt ein zugehöriges 3D-Modell 18 des Flugzeugs 1;
C) Es erfolgt ein optisches Tracking anhand der Live-3D-LIDAR-Messdaten 10, bei dem ein zuvor registrierte Position der Flugzeugtür 2 fortlaufend mit Hilfe eines ICP-Algorithmus aktualisiert wird, sodass fortlaufend neu registriert wird;
D) Das Steuerungssystem 14 geniert POSE-Schätzungen der Flugzeugtür 2 im Sensorraum und (optional) auch in Bezug zur Flugzeugbrücke 4 (also z.B. in deren Welt-Koordinatensystem);
E) Das Steuerungssystem 14 vergleicht das anzufahrende Ziel (Flugzeugtür 2) mit der derzeitigen Position unter Einsatz eines Transformationsbaums (dieser beschreibt die Kinematik der Flugzeugbrücke 4);
F) Das Steuerungssystem generiert Steuersignale 8 und führt diese aus.

Die Schritte C und D werden dabei in einer Schleife wiederholt und in sehr kurzen Zeitabständen von wenigen ms durchlaufen, wodurch eine Kontrolle in Echtzeit ermöglicht wird. Schritt B kann hingegen länger dauern, da er nur einmalig initial für ein anzufahrendes Flugzeug 1 ausgeführt werden muss.

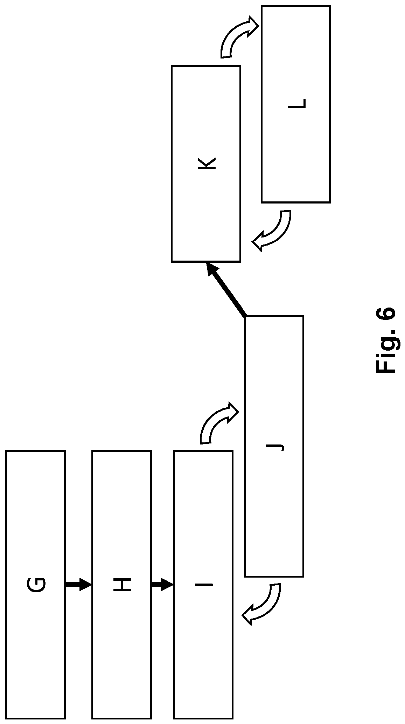

In Fig. 6 ist hingegen ein ähnlicher Ablauf dargestellt, diesmal jedoch für die zweite Datenleitung 13b, in welcher die Live-2D-Bilddaten 12 des Kamerasystems 11 vom Steuerungssystem 14 verarbeitet werden:
G) Auf Basis eines neuronalen Netzes segmentiert das Steuerungssystem 14 zunächst die vom Kamerasystem 11 gelieferten Bilddaten 12, um darin die zahlreichen Objekte 21 des Flugzeug 1 zu identifizieren;
H) Ein Klassifizierungs-Neuron eines NN bestimmt den Flugzeugtyp. Das Steuerungssystem 14 lädt nun ein spezifisches neuronales Netz (NN), welches auf den gerade bestimmten Flugzeug-Typ ausgelegt ist.
I) Es erfolgt ein optisches Tracking anhand der Bilddaten 12 unter Einsatz einen Kalman-Filters und des zuvor herunter geladenen spezifischen NN. Hierbei wird die jeweilige neue Position der Flugzeugtür 2 auf Basis einer vorherigen Position und einer Bewegungsabschätzung ermittelt.
J) Das Steuerungssystem 14 generiert eine POSE-Schätzung, entweder in 3D- oder in 2D;
K) Das Steuerungssystem 14 vergleicht auch hier wieder erneut das anzufahrende Ziel mit der aktuellen Position unter Berücksichtigung eines Transformationsbaums;
L) Das Steuerungssystem 14 erzeugt Steuersignale 8 und die Flugzeugbrücke 4 führt diese aus.

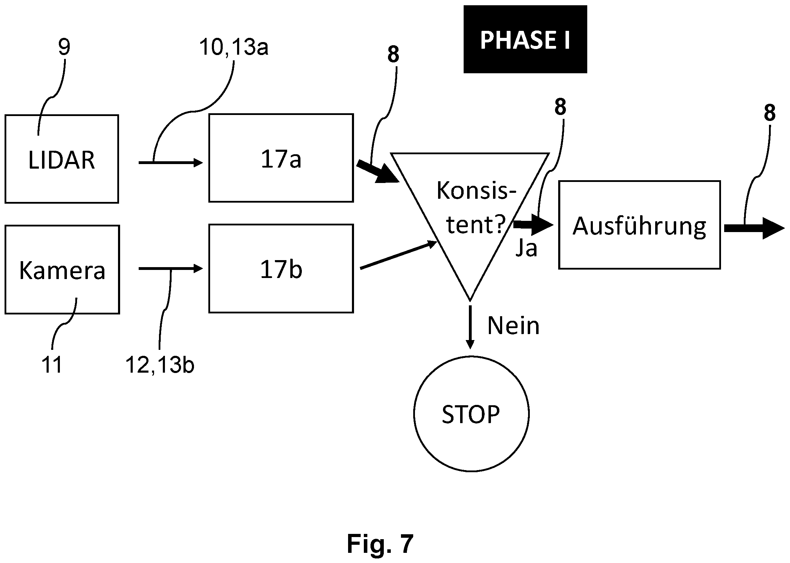

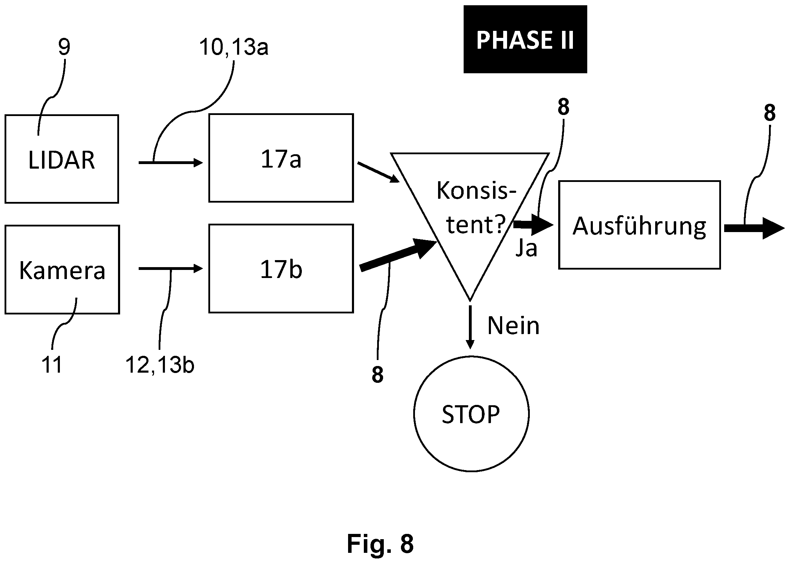

In den Figuren 7 und 8 ist erläutert, dass je nach Ausgestaltung des erfindungsgemäßen Verfahrens bzw. des erfindungsgemäßen intelligenten Steuerungssystems 14 die eigentlichen Steuersignale 8, die später tatsächlich an die Flugzeugbrücke 4 (genauer deren internes Steuersystem) übermittelt werden, entweder in der ersten Daten-Pipeline 13a und/oder in der zweiten Daten-Pipeline 13b erzeugt werden können. Dies kann auch zeitlich alternierend erfolgen: So können in einer ersten Phase I, während der eine Grobanfahrt der Flugzeugtür 2 mit der Flugzeugbrücke 4 bei vergleichsweise hoher Verfahrgeschwindigkeit erfolgt, Steuersignale 8 auf Basis der LIDAR-Messdaten 10 in der ersten Daten-Pipeline 13a vom Steuerungssystem 14 erzeugt werden. In Phase I werden dabei die Steuersignale 8 mittels Kontrollsignalen 17b, die auf den 2D-Kameradaten 12 basieren, auf Stimmigkeit vom Steuerungssystem 14 überprüft.

Hat die Flugzeugbrücke 14 sich ausreichend bis auf wenige Meter bis cm an die Flugzeugtür 2 angenähert, so wechselt das Steuerungssystem 14 in eine zweite Phase II, wie in Fig. 8 illustriert. Während der zweiten Phase II erfolgt eine Feinanfahrt der Flugzeugtür 2 mit der Flugzeugbrücke 4 bei abgesenkter Verfahrgeschwindigkeit, wobei dann die Steuersignale 8 auf Basis der 2D-Bilddaten 12 in der zweiten Daten-Pipeline 13a vom Steuerungssystem 14 erzeugt werden, und zwar mittels eines "visual servoing"-Ansatzes. Während dieser Phase II werden die auf diese Weise erzeugten Steuersignale 8 weiterhin mittels der LIDAR-Messdaten 10 vom Steuerungssystem 14 überprüft.

Es sind auch Ausgestaltungen wie in Fig. 4 gezeigt möglich, bei der, zumindest zeitweise, in beiden Daten-Pipelines 13a, 13b jeweilige Steuersignale 8 vom Steuerungssystem erzeugt werden, die jeweils zum Steuern der Flugzeugbrücke 4 eingesetzt werden könnten.

Zusammenfassend wird erstmals eine autonom fahrende Flugzeugbrücke 4 vorgeschlagen, die in der Lage ist, auf Basis einer komplexen Kamera- und LIDAR-basierten Sensorik **9, 11** eine Flugzeugtür 2 eines in einer Parkposition 16 abgestellten Flugzeugs 1 selbsttätig anzufahren und dabei die Umgebung mittels eines LIDAR-Sensorsystems 9 und mit Hilfe eines Kamerasystems 11 wahrzunehmen (vgl. Fig. 1).

### Bezugszeichenliste

- 1: Flugzeug (dies kann ein Passagier-Flugzeug oder ein Frachtflugzeug sein)
- 2: Flugzeugtür (insbesondere Kabinentür mit Zugang zu einem für Personen vorgesehenen Passagierraum des Flugzeugs oder aber Frachttür, welche Zugang zu einem Transportraum des Flugzeugs bietet, in welchen Transportgüter geladen werden können)
- 3: Türrahmen (von 2)
- 4: Flugzeugbrücke (insbesondere ausgestaltet in Form einer Fluggastbrücke "passenger boarding bridge" oder in Form einer Transportbrücke bzw**.** Entlade-/Beladebrücke zum Entladen/Beladen von Transportgütern aus/in das Flugzeug)
- 5: selbstfahrendes Fahrwerk (von 4)
- 6: Fahrantrieb (als Teil von 5)
- 7: Aktuatoren (von 4/5)
- 8: Steuersignale (zum Ansteuern von 5/6/7)
- 9: LIDAR-Sensorsystem
- 10: LIVE-3D-Messdaten (fortlaufend geliefert von 9)
- 11: Kamerasystem
- 12: LIVE-2D-Bilddaten
- 13: Datenleitung ("data pipeline")
- 14: intelligentes Steuerungssystem
- 15: vorderes Ende (von 4)
- 16: Parkposition
- 17: Kontrollsignal
- 18: 3D-Modell (von 1; wird definiert durch den vom Algorithmus bestimmten Typ des Flugzeugs; der Typ des Flugzeugs kann auch als externe Information von einem externen System geliefert werden (z.B**.** Flughafen-IT-System))
- 19: Aktorik (kann 5,6 und 7 umfassen)
- 20: Sensorik
- 21: Objekte (von 1, werden von 14 identifiziert und klassifiziert)
- 22: Triebwerk

## Patentansprüche

1. **Computer-implementiertes Verfahren zum Erzeugen von Steuersignalen (8), die dem autonomen Steuern einer selbstfahrenden Flugzeugbrücke (4)** beim Anfahren einer Flugzeugtür (2) eines in einer Parkposition (16) abgestellten Flugzeugs (1) oder beim Abdocken von der Flugzeugtür (2) **dienen,**
- wobei fortlaufend von einem intelligenten Steuerungssystem (14)
(i) in einer ersten Datenleitung (13a) Live-3D-LIDAR-Messdaten (10) eines LIDAR-Sensorsystems (9) und
(ii) in einer zweiten von der ersten unabhängigen Datenleitung (13b) Live-2D-Bilddaten (12) eines Kamerasystems (11)
zu jeweiligen unabhängigen Kontrollsignalen (17a, 17b) verarbeitet werden, und
- wobei aus den beiden unabhängigen Kontrollsignalen (17a, 17b) in Echtzeit Steuersignale (8) erzeugt werden, die die Flugzeugbrücke (4) beim Verfahren entlang eines Anfahrtswegs hin zur Flugzeugtür (2) oder entlang eines Abfahrtswegs weg von der Flugzeugtür (2) autonom ohne menschliches Eingreifen steuern,
- vorzugsweise wobei die Flugzeugbrücke (4) gemäß einem der Ansprüche 13-17 ausgestaltet ist.

2. Verfahren nach Anspruch 1, wobei das Steuerungssystem (14) jeweils anhand
- der Live-2D-Bilddaten (12) und, unabhängig hiervon, auch anhand
- der Live-3D-LIDAR-Messdaten
eine Position und eine räumliche Orientierung der Flugzeugtür (2) fortlaufend ermittelt und im Raum verfolgt, während die Flugzeugbrücke (4) relativ zum Flugzeug (1) mittels der Steuersignale (8) vom Steuerungssystem (14) verfahren wird.

3. Verfahren nach einem der vorhergehenden Ansprüche,
- wobei das Steuerungssystem (14), zumindest zeitweise, auf Basis der Live-2D-Bilddaten (12) die Steuersignale (8) unter Anwendung eines visual servoing Ansatzes erzeugt, bei welchem relative Abstände zwischen der Flugzeugbrücke (4) und dem Flugzeug (1) in einem Bildraum der Live-2D-Bilddaten (12) ermittelt werden,
- insbesondere wobei das Steuerungssystem (14) gleichzeitig eine räumliche Position und Orientierung des Flugzeugs (1) anhand der 3D-LIDAR-Messdaten (10) fortlaufend ermittelt und hieraus eine Schätzung der aktuellen Position und Orientierung der Flugzeugtür (2) in 6D errechnet und diese 6D-Pose-Schätzung bei der Erzeugung der Steuersignale (8) mit berücksichtigt wird.

4. Verfahren nach einem der vorhergehenden Ansprüche, wobei die beiden unabhängigen Kontrollsignale (17a, 17b) noch vor Erzeugung der Steuersignale (8) einer computer-implementierten Konsistenzprüfung unterzogen werden, um die Sicherheit zu erhöhen.

5. Verfahren nach einem der vorhergehenden Ansprüche, wobei die erste und die zweite Datenleitung (13a, 13b) jeweils in Echtzeit voneinander unabhängige initiale Schätzungen einer 6D Pose der Flugzeugtür (2) erzeugen, wobei diese initialen Schätzungen die Grundlage bilden für die Erzeugung der Steuersignale (8).

6. Verfahren nach einem der vorhergehenden Ansprüche,
- wobei ein 3D-Modell (18) des Flugzeugs (1) beim Erzeugen der Steuersignale (8) vom Steuerungssystem (14) mit berücksichtigt wird, vorzugsweise durch Registrierung der Live-3D-LIDAR-Messdaten (10) des LIDAR-Sensorsystems (9) auf das 3D-Modell (18),
- vorzugsweise wobei das 3D-Modell (18) des Flugzeugs (1) vom Steuerungssystem (14) dazu eingesetzt wird, die LIVE-3D-Messdaten des LIDAR-Sensorsystems (9) abzugleichen, um so das 3D-Modell (18) akkurat in einem virtuellen Weltmodell der Flugzeugbrücke (4) zu verorten und hieraus eine Relativposition zwischen Flugzeugbrücke (4) und Flugzeug (1) abzuschätzen,
- insbesondere wobei ein Flugzeugtyp des Flugzeugs (1) vom Steuerungssystem (14) bestimmt oder von einer externen Quelle abgerufen oder übermittelt wird und anhand des bestimmten Flugzeugtyps das 3D-Modell (18) des in der Warteposition (16) abgestellten Flugzeugs (4) vom Steuerungssystem (14) erzeugt wird, insbesondere durch Abrufen von CAD-Daten von einer externen Datenbank.

7. Verfahren nach einem der vorhergehenden Ansprüche,
- wobei ein/der Flugzeugtyp des Flugzeugs (1) auf Basis einer computer-implementierten Klassifizierung, vorzugsweise unter Einsatz eines neuronalen Netzes (NN) und/oder durch Auswertung der Live-2D-Bilddaten (12) des Kamerasystems (11), vom Steuerungssystem (14) selbst bestimmt wird
- vorzugsweise wobei hierzu einzelne Objekte (21) des Flugzeugs (1), insbesondere die Flugzeugtür (2) und/oder ein Türrahmen (3) der Flugzeugtür (2), in den Live-2D-Bilddaten (12) identifiziert werden und die Klassifizierung die so identifizierten Objekte (21) analysiert,
- insbesondere wobei diese Identifizierung der Objekte (21) auf einer Bildsegmentierung und/oder auf einer Merkmalspunktmarkierung beruht.

8. Verfahren nach einem der vorhergehenden Ansprüche,
- wobei eine/die vom Steuerungssystem (14) implementierte Bildsegmentierung der Live-2D-Bilddaten (12) auf
- einem Autoencoder-ähnlichen Neuronalen Netz und/oder
- einem Neuronalen Netz mit einer U-NET-Architektur und/oder
- einem convolutional neural network (CNN) basiert und/oder
- wobei eine vom Steuerungssystem (14) implementierte Positionsbestimmung der Flugzeugtür (2) die vorsegmentierten Live-2D-Bilddaten (12) verarbeitet.

9. Verfahren nach einem der vorhergehenden Ansprüche,
- wobei eine vom Steuerungssystem (14) ermittelte oder von außen abgerufene initiale POSE-Schätzung eines vom Steuerungssystem (14) identifizierten Objekts (21) des Flugzeugs (1) mit Hilfe eines iterativen Algorithmus, insbesondere eines iterative-closest-point (ICP)-Algorithmus, verbessert wird,
- insbesondere um so die Genauigkeit bei der Bestimmung einer Position der Flugzeugbrücke (4) relativ zum Flugzeug (1) zu verbessern.

10. Verfahren nach einem der vorhergehenden Ansprüche,
- wobei das Steuerungssystem (14) die Flugzeugbrücke (4) auf Basis von relativen Positionen zwischen einem vorderen Ende (15) der Flugzeugbrücke (4) und dem Flugzeug (1) verfährt, die das Steuerungssystem (14) anhand der Live-2D-Bilddaten (12) ermittelt.

11. **Intelligente, autonom und selbstfahrende Flugzeugbrücke (4),** umfassend:
- eine Aktorik (19) mit der die Flugzeugbrücke (4) bewegt werden kann,
- insbesondere in Form eines Fahrwerks (5) mit eigenem Fahrantrieb (6) und/oder
- in Form wenigstens eines Aktuators (7),
- eine an der Flugzeugbrücke (4) angebrachte und damit mitbewegte Sensorik (20), die
- ein LIDAR-Sensorsystem (9) zur Erzeugung von Live-3D-LIDAR-Messdaten (10) und
- ein Kamerasystem (11) zur Erzeugung von Live-2D-Bilddaten (12) umfasst, sowie
- ein intelligentes Steuerungssystem (14), vorzugsweise auf Basis einer künstlichen Intelligenz (KI), welches dazu eingerichtet ist,
durch Verarbeiten der Live-3D-LIDAR-Messdaten (10) und der Live-2D-Bilddaten (12) jeweils in Echtzeit Steuersignale (8) für die Aktorik (19) zu erzeugen und
so ein vorderes Ende (15) der Flugzeugbrücke (4) relativ zu einer Flugzeugtür (3) eines in einer Warteposition (16) abgestellten Flugzeugs (1) zu bewegen,
- insbesondere wobei die Flugzeugbrücke (4) und/oder das Steuerungssystem (4) dazu ausgestaltet und eingerichtet sind, ein Verfahren gemäß einem der Ansprüche 1 bis 10 zu implementieren.

12. Flugzeugbrücke (4) nach einem der beiden vorhergehenden Ansprüche, wobei das intelligente Steuerungssystem (14) eine künstliche Intelligenz (KI) auf Basis wenigstens eines Neuronalen Netzes (NN) umfasst,
- insbesondere wobei das Neuronale Netz zum Zwecke einer bildbasierten Objekterkennung zur Segmentierung der Live-2D-Bilddaten (12) des Kamerasystems (11) eingerichtet ist.

13. Flugzeugbrücke (4) nach einem der Ansprüche 10-12, wobei das Steuerungssystem (4) zur Beschleunigung über eine Hardware verfügt, die auf eine Inferenz von Neuronalen Netzen (NN) ausgerichtet ist und hierzu über
- mehrere parallel arbeitende Prozessoren und/oder
- mehrere parallele Verarbeitungspipelines und/oder
- hierfür optimierte Befehlssätze
verfügt, und
- wobei diese Hardware dazu eingerichtet ist, ein neuronales Netz (NN) zu implementieren mit dem Konturen und Flächen von Objekten (21) in den Live-2D-Bilddaten (12) in Echtzeit im Rahmen einer Bildsegmentierung bestimmt werden können,
- insbesondere derart, dass das Steuerungssystem (14) auf Basis dieser Bildsegmentierung 6D-Pose-Schätzungen der Objekte (21) in Echtzeit ermitteln kann.

14. Flugzeugbrücke (4) nach einem der Ansprüche 10-13,
- wobei das Steuerungssystem (4) dazu eingerichtet ist, aus den Live-3D-Messdaten (10) des LIDAR-Sensorsystems (9) und aus den Live-2D-Bilddaten (12) des Kamerasystems (11) jeweils unabhängige 6D-Pose-Schätzungen von Objekten (21) zu bestimmen und die Steuersignale (8) unter Berücksichtigung beider dieser 6D-Pose-Schätzungen abzuleiten.

15. **Nachrüst-Set** zur nachträglichen Integration in eine bestehende unintelligente selbstfahrende Flugzeugbrücke (4), wobei das Nachrüst-Set
- ein intelligentes Steuerungssystem (14) sowie ein
- ein zugehöriges LIDAR-Sensorsystem (9) und
- ein zugehöriges Kamerasystem (11) umfasst und
- wobei das Steuerungssystem (14) dazu eingerichtet ist,
- in einer ersten Datenleitung (13a) Live-3D-LIDAR-Messdaten (10) des LIDAR-Sensorsystems (9) und in einer zweiten Datenleitung (13b) Live-2D-Bilddaten (12) des Kamerasystems (11) jeweils unabhängig voneinander zu jeweiligen unabhängigen Kontrollsignalen (17a, 17b) zu verarbeiten sowie dazu,
- aus den beiden unabhängigen Kontrollsignalen (17a, 17b) in Echtzeit Steuersignale (8) zu erzeugen, die dazu dienen, die Flugzeugbrücke (4), insbesondere vermittelt durch eine bestehende manuelle Steuerung, zu verfahren.

## Geänderte Patentansprüche

### Geänderte Patentansprüche gemäss Regel 137(2) EPÜ.

1. **Computer-implementiertes Verfahren zum Erzeugen von redundanten Steuersignalen (8), die jeweils dem autonomen Steuern einer selbstfahrenden Flugzeugbrücke (4)** beim Anfahren einer Flugzeugtür (2) eines in einer Parkposition (16) abgestellten Flugzeugs (1) oder beim Abdocken von der Flugzeugtür (2) **dienen,**
- wobei fortlaufend von einem intelligenten Steuerungssystem (14)
(i) in einer ersten Datenleitung (13a) Live-3D-LIDAR-Messdaten (10) eines LIDAR-Sensorsystems (9) und
(ii) in einer zweiten, von der ersten unabhängigen Datenleitung (13b) Live-2D-Bilddaten (12) eines Kamerasystems (11)
zu jeweiligen unabhängigen Kontrollsignalen (17a, 17b) verarbeitet werden,
- wobei aus den beiden unabhängigen Kontrollsignalen (17a, 17b) in Echtzeit Steuersignale (8) erzeugt werden,
- die in beiden Datenleitungen (13a, 13b) jeweils erzeugt werden und
- die die Flugzeugbrücke (4) beim Verfahren entlang eines Anfahrtswegs hin zur Flugzeugtür (2) oder entlang eines Abfahrtswegs weg von der Flugzeugtür (2) autonom ohne menschliches Eingreifen steuern,
- wobei das Steuerungssystem (14) jeweils anhand
- der Live-2D-Bilddaten (12) eine Position und eine räumliche Orientierung der Flugzeugtür (2) und, unabhängig hiervon, auch anhand
- der Live-3D-LIDAR-Messdaten eine Position und eine räumliche Orientierung der Flugzeugtür (2) fortlaufend ermittelt und im Raum verfolgt, während die Flugzeugbrücke (4) relativ zum Flugzeug (1) mittels der Steuersignale (8) vom Steuerungssystem (14) verfahren wird, sodass das Steuerungssystem (14) den Anfahrts- oder Abfahrtsweg auf Basis von Daten der beiden unabhängigen Datenleitungen (13a, 13b) redundant überwacht,
- vorzugsweise wobei die Flugzeugbrücke (4) gemäß einem der Ansprüche 13-17 ausgestaltet ist.

2. Verfahren nach einem der vorhergehenden Ansprüche,
- wobei das Steuerungssystem (14), zumindest zeitweise, auf Basis der Live-2D-Bilddaten (12) die Steuersignale (8) unter Anwendung eines visual servoing Ansatzes erzeugt, bei welchem relative Abstände zwischen der Flugzeugbrücke (4) und dem Flugzeug (1) in einem Bildraum der Live-2D-Bilddaten (12) ermittelt werden,
- insbesondere wobei das Steuerungssystem (14) gleichzeitig eine räumliche Position und Orientierung des Flugzeugs (1) anhand der 3D-LIDAR-Messdaten (10) fortlaufend ermittelt und hieraus eine Schätzung der aktuellen Position und Orientierung der Flugzeugtür (2) in 6D errechnet und diese 6D-Pose-Schätzung bei der Erzeugung der Steuersignale (8) mit berücksichtigt wird.

3. Verfahren nach einem der vorhergehenden Ansprüche, wobei die beiden unabhängigen Kontrollsignale (17a, 17b) noch vor Erzeugung der Steuersignale (8) einer computer-implementierten Konsistenzprüfung unterzogen werden, um die Sicherheit zu erhöhen.

4. Verfahren nach einem der vorhergehenden Ansprüche, wobei die erste und die zweite Datenleitung (13a, 13b) jeweils in Echtzeit voneinander unabhängige initiale Schätzungen einer 6D Pose der Flugzeugtür (2) erzeugen, wobei diese initialen Schätzungen die Grundlage bilden für die Erzeugung der Steuersignale (8).

5. Verfahren nach einem der vorhergehenden Ansprüche,
- wobei ein 3D-Modell (18) des Flugzeugs (1) beim Erzeugen der Steuersignale (8) vom Steuerungssystem (14) mit berücksichtigt wird, vorzugsweise durch Registrierung der Live-3D-LIDAR-Messdaten (10) des LIDAR-Sensorsystems (9) auf das 3D-Modell (18),
- vorzugsweise wobei das 3D-Modell (18) des Flugzeugs (1) vom Steuerungssystem (14) dazu eingesetzt wird, die LIVE-3D-Messdaten des LIDAR-Sensorsystems (9) abzugleichen, um so das 3D-Modell (18) akkurat in einem virtuellen Weltmodell der Flugzeugbrücke (4) zu verorten und hieraus eine Relativposition zwischen Flugzeugbrücke (4) und Flugzeug (1) abzuschätzen,
- insbesondere wobei ein Flugzeugtyp des Flugzeugs (1) vom Steuerungssystem (14) bestimmt oder von einer externen Quelle abgerufen oder übermittelt wird und anhand des bestimmten Flugzeugtyps das 3D-Modell (18) des in der Warteposition (16) abgestellten Flugzeugs (4) vom Steuerungssystem (14) erzeugt wird, insbesondere durch Abrufen von CAD-Daten von einer externen Datenbank.

6. Verfahren nach einem der vorhergehenden Ansprüche,
- wobei ein/der Flugzeugtyp des Flugzeugs (1) auf Basis einer computer-implementierten Klassifizierung, vorzugsweise unter Einsatz eines neuronalen Netzes (NN) und/oder durch Auswertung der Live-2D-Bilddaten (12) des Kamerasystems (11), vom Steuerungssystem (14) selbst bestimmt wird
- vorzugsweise wobei hierzu einzelne Objekte (21) des Flugzeugs (1), insbesondere die Flugzeugtür (2) und/oder ein Türrahmen (3) der Flugzeugtür (2), in den Live-2D-Bilddaten (12) identifiziert werden und die Klassifizierung die so identifizierten Objekte (21) analysiert,
- insbesondere wobei diese Identifizierung der Objekte (21) auf einer Bildsegmentierung und/oder auf einer Merkmalspunktmarkierung beruht.

7. Verfahren nach einem der vorhergehenden Ansprüche,
- wobei eine/die vom Steuerungssystem (14) implementierte Bildsegmentierung der Live-2D-Bilddaten (12) auf
- einem Autoencoder-ähnlichen Neuronalen Netz und/oder
- einem Neuronalen Netz mit einer U-NET-Architektur und/oder
- einem convolutional neural network (CNN) basiert und/oder
- wobei eine vom Steuerungssystem (14) implementierte Positionsbestimmung der Flugzeugtür (2) die vorsegmentierten Live-2D-Bilddaten (12) verarbeitet.

8. Verfahren nach einem der vorhergehenden Ansprüche,
- wobei eine vom Steuerungssystem (14) ermittelte oder von außen abgerufene initiale POSE-Schätzung eines vom Steuerungssystem (14) identifizierten Objekts (21) des Flugzeugs (1) mit Hilfe eines iterativen Algorithmus, insbesondere eines iterative-closest-point (ICP)-Algorithmus, verbessert wird,
- insbesondere um so die Genauigkeit bei der Bestimmung einer Position der Flugzeugbrücke (4) relativ zum Flugzeug (1) zu verbessern.

9. Verfahren nach einem der vorhergehenden Ansprüche,
- wobei das Steuerungssystem (14) die Flugzeugbrücke (4) auf Basis von relativen Positionen zwischen einem vorderen Ende (15) der Flugzeugbrücke (4) und dem Flugzeug (1) verfährt, die das Steuerungssystem (14) anhand der Live-2D-Bilddaten (12) ermittelt.

10. **Intelligente, autonome und selbstfahrende Flugzeugbrücke (4),** umfassend:
- eine Aktorik (19) mit der die Flugzeugbrücke (4) bewegt werden kann,
- insbesondere in Form eines Fahrwerks (5) mit eigenem Fahrantrieb (6) und/oder
- in Form wenigstens eines Aktuators (7),
- eine an der Flugzeugbrücke (4) angebrachte und damit mitbewegte Sensorik (20), die
- ein LIDAR-Sensorsystem (9) zur Erzeugung von Live-3D-LIDAR-Messdaten (10) und
- ein Kamerasystem (11) zur Erzeugung von Live-2D-Bilddaten (12) umfasst, sowie
- ein intelligentes Steuerungssystem (14), vorzugsweise auf Basis einer künstlichen Intelligenz (KI), welches dazu eingerichtet ist,
durch Verarbeiten der Live-3D-LIDAR-Messdaten (10) und der Live-2D-Bilddaten (12) jeweils in Echtzeit Steuersignale (8) für die Aktorik (19) zu erzeugen und
so ein vorderes Ende (15) der Flugzeugbrücke (4) relativ zu einer Flugzeugtür (3) eines in einer Warteposition (16) abgestellten Flugzeugs (1) zu bewegen,
- wobei das Steuerungssystem (4) dazu ausgestaltet und eingerichtet sind, ein Verfahren gemäß einem der Ansprüche 1 bis 9 zu implementieren.

11. Flugzeugbrücke (4) nach einem der beiden vorhergehenden Ansprüche, wobei das intelligente Steuerungssystem (14) eine künstliche Intelligenz (KI) auf Basis wenigstens eines Neuronalen Netzes (NN) umfasst,
- insbesondere wobei das Neuronale Netz zum Zwecke einer bildbasierten Objekterkennung zur Segmentierung der Live-2D-Bilddaten (12) des Kamerasystems (11) eingerichtet ist.

12. Flugzeugbrücke (4) nach einem der Ansprüche 10-12, wobei das Steuerungssystem (4) zur Beschleunigung über eine Hardware verfügt, die auf eine Inferenz von Neuronalen Netzen (NN) ausgerichtet ist und hierzu über
- mehrere parallel arbeitende Prozessoren und/oder
- mehrere parallele Verarbeitungspipelines und/oder
- hierfür optimierte Befehlssätze
verfügt, und
- wobei diese Hardware dazu eingerichtet ist, ein neuronales Netz (NN) zu implementieren mit dem Konturen und Flächen von Objekten (21) in den Live-2D-Bilddaten (12) in Echtzeit im Rahmen einer Bildsegmentierung bestimmt werden können,
- insbesondere derart, dass das Steuerungssystem (14) auf Basis dieser Bildsegmentierung 6D-Pose-Schätzungen der Objekte (21) in Echtzeit ermitteln kann.

13. Flugzeugbrücke (4) nach einem der Ansprüche 10-13,
- wobei das Steuerungssystem (4) dazu eingerichtet ist, aus den Live-3D-Messdaten (10) des LIDAR-Sensorsystems (9) und aus den Live-2D-Bilddaten (12) des Kamerasystems (11) jeweils unabhängige 6D-Pose-Schätzungen von Objekten (21) zu bestimmen und die Steuersignale (8) unter Berücksichtigung beider dieser 6D-Pose-Schätzungen abzuleiten.

14. **Nachrüst-Set** zur nachträglichen Integration in eine bestehende, unintelligente und selbstfahrende Flugzeugbrücke (4), wobei das Nachrüst-Set
- ein intelligentes Steuerungssystem (14), welches dazu eingerichtet ist, ein Verfahren gemäß einem der Ansprüche 1 bis 9 auszuführen,
- ein zugehöriges LIDAR-Sensorsystem (9) und
- ein zugehöriges Kamerasystem (11) umfasst und
- wobei das Steuerungssystem (14) dazu eingerichtet ist,
- in einer ersten Datenleitung (13a) Live-3D-LIDAR-Messdaten (10) des LIDAR-Sensorsystems (9) und in einer zweiten Datenleitung (13b) Live-2D-Bilddaten (12) des Kamerasystems (11) jeweils unabhängig voneinander zu jeweiligen unabhängigen Kontrollsignalen (17a, 17b) zu verarbeiten sowie dazu,
- aus den beiden unabhängigen Kontrollsignalen (17a, 17b) in Echtzeit Steuersignale (8) zu erzeugen, die dazu dienen, die Flugzeugbrücke (4), insbesondere vermittelt durch eine bestehende manuelle Steuerung, zu verfahren.
